# EUROPÄISCHE PATENTANMELDUNG

(11) **EP 4 145 038 A1**
(43) Veröffentlichungstag der Anmeldung: **08.03.2023**
(21) Anmeldenummer: 22190175.4
(22) Anmeldetag: 12.08.2022
(51) Int. Cl.: F16M 13/02, F16M 11/04, F16M 11/22

(54) **HALTEANORDNUNG ZUR HALTERUNG EINES MOBILEN ENDGERÄTS**

(30) Priorität: 24.08.2021 DE 102021121917
(71) Anmelder: "DURABLE" HUNKE & JOCHHEIM GMBH & CO. KOMMANDITGESELLSCHAFT, 58636 Iserlohn (DE)
(72) Erfinder: Schifferens, Rolf, 58675 Hemer (DE)
(74) Vertreter: Beckord & Niedlich Patentanwälte PartG mbB

(57) **Zusammenfassung**

Die Erfindung betrifft eine Halteanordnung (100, 200) zur Halterung eines mobilen Endgeräts (E), umfassend zumindest eine erste Halterung (10, 210) und eine zweite Halterung (10', 210'), wobei die Halterungen (10, 10', 210, 210') jeweils eine Rückwand (12, 212, 212'), eine sich im Wesentlichen entlang der Rückwand (12, 212, 212') erstreckende Vorderwand (11, 11') und einen sich zwischen Vorderwand (11, 11') und Rückwand (12, 212, 212') erstreckenden Boden (15) aufweisen, wobei die Vorderwand (11, 11'), die Rückwand (12, 212, 212') und der Boden (15) der ersten Halterung (10, 210) und der zweiten Halterung (10', 210') jeweils eine Aufnahme (17) bilden, dadurch gekennzeichnet, dass die Rückwand (12, 212, 212') jeweils eine von der Vorderwand (11, 11') abgewandte Verankerungsmodulhaltefläche (13, 213) mit jeweils zumindest einer Verankerungsmodulaufnahme (24, 224, 224') aufweist, und die Halteanordnung (100, 200) zumindest ein erstes Verankerungsmodul (30, 230) und zumindest ein zweites Verankerungsmodul (30, 230) umfasst, wobei die Verankerungsmodule (30, 230) eine Vorderseite (31), umfassend eine Halterungskupplung (40, 240), und eine Rückseite (32), umfassend eine Wandhalterungsfläche (33, 233), aufweisen, und wobei in einem bestimmungsgemäß gekoppelten Zustand einer Halterung (10, 10', 210, 210') mit einem Verankerungsmodul (30, 230) die Verankerungsmodulaufnahme (24, 224, 224') an der Rückwand (12, 212, 212') der Halterung (10, 10', 210, 210') mit der Halterungskupplung (40, 240) an der Vorderseite (31) des Verankerungsmoduls (30, 230) zusammenwirkt. Ferner betrifft die Erfindung ein Verfahren zur Montage einer Halteanordnung an einer Wandfläche.

## Beschreibung

Die Erfindung betrifft eine Halteanordnung zur Halterung eines mobilen Endgeräts, welche zumindest eine erste Halterung und eine im Wesentlichen dazu spiegelsymmetrisch ausgebildete zweite Halterung umfasst. Die Erfindung betrifft weiterhin eine Verwendung einer solchen Halteanordnung sowie ein Verfahren zur Montage einer solchen Halteanordnung für ein mobiles Endgerät.

Unter einem mobilen Endgerät im Sinne dieser Erfindung ist dabei insbesondere ein flächiges bzw. flaches Kommunikationsendgerät mit einem Display auf einer Flachseite zu verstehen, beispielsweise ein Tablet-PC (kurz Tablet genannt), ein Smartphone, ein eBook-Reader oder Ähnliches. Halteanordnungen der eingangs genannten Art zum Halten von Tablets, Smartphones, eBook-Reader oder dergleichen werden inzwischen im Markt auch als "Tablet-Halter" bezeichnet. Daher kann im Folgenden auch dieser Begriff verwendet werden, wobei der Begriff "Tablet-Halter" im Rahmen der Erfindung nicht einschränkend zu verstehen ist, sondern als eine Halteanordnung, die neben den bevorzugten Tablets und eBook-Readern auch andere mobile Endgeräte, insbesondere - gegebenenfalls bei entsprechender Größenanpassung auch - Smartphones, halten kann.

Tablets oder Smartphones, werden inzwischen mehr und mehr für Aktionen bzw. Arbeiten genutzt, in denen sie nicht in der Hand gehalten, sondern auf einem Tisch oder dergleichen abgelegt werden. In einer flachen, horizontalen Lage des Geräts hat der Bediener aber nicht den optimalen Blickwinkel auf den Bildschirm. Oftmals soll der Tablet-Computer auch nicht auf einem Tisch abgelegt werden, da das Tablet leicht verschmutzen könnte und der Platz auf dem Tisch für anderweitige Dinge, verwendet wird. Dies wäre beispielsweise gerade in einer Küche der Fall, in der Essen zubereitet wird. Jedoch gerade während des Kochens, Backens, etc. findet ein Tablet immer häufiger seinen Einsatz, beispielsweise zum Nachschlagen von Rezepten, Musikhören oder dergleichen.

Daher gibt es inzwischen in der Praxis eine Vielzahl von Ablageeinrichtungen bzw. Tablet-Halter, auf denen das Gerät abgelegt bzw. gehalten werden kann. Oftmals befinden sich solche Halterungen an Präsentationständern, wie beispielsweise in Museen, in Messen oder Verkaufsausstellungen bzw. Läden, aber auch an Schreibtischen. Diese Präsentationsständer sind jedoch recht groß und nehmen entsprechend Platz ein, was vor allem einen häuslichen Gebrauch ausschließt.

Alternativ werden Tablet-Halter angeboten, bei denen das Tablet direkt an einer Wandfläche oder dergleichen angebracht werden kann. Als Wandfläche kann dabei im Rahmen der Erfindung jede gerade Oberfläche verstanden werden. So kann es sich dabei beispielsweise um eine Küchenwand, die Front eines Schranks oder eine Tür oder dergleichen handeln.

Die DE 11 2012 005 160 B4 beschreibt dazu eine Halteanordnung bestehend aus zwei Halterungen, die eine elektronische Vorrichtung, wie beispielsweise ein Tablet an einer Wand halten. Dazu werden zunächst die Halterungen entsprechend einer Abmessung einer zu haltenden elektronischen Vorrichtung mittels lösbarer Haftstreifen bzw. Klebestreifen, die an der glatten Rückseite der Halterungen befestigt sind, an einer Wand montiert. Daraufhin kann die elektronische Vorrichtung mit ihren unteren Ecken in die Halterungen eingeschoben werden und wird so von diesen gestützt und gehalten. Eine derartige Halteanordnung hat jedoch mehrere Nachteile. Insbesondere bei häufig wechselnden Raumbedingungen mit Temperatur- und Feuchtigkeitsschwankungen, wie dies z. B. in Küchen typischerweise der Fall ist, besteht je nach Qualität des Klebers die Gefahr, dass die Verbindung nicht dauerhaft fest ist. Insbesondere für den privaten Gebrauch fügt sie sich auch im gerade nicht gebrauchten Zustand (also ohne Tablet) optisch nicht sehr ansprechend ein, da dann die Abziehlaschen der Klebestreifen, die sonst vom Tablet abgedeckt werden, nicht mehr verdeckt sind, und da sich die Halterungen auch nicht temporär gut verdecken lassen.

Es ist eine Aufgabe der vorliegenden Erfindung, die besagten Nachteile des Stands der Technik zu überwinden und eine verbesserte Halteanordnung bereitzustellen, um ein mobiles Endgerät sicherer zu halten.

Diese Aufgabe wird durch eine Halteanordnung nach Anspruch 1, ein Verfahren zur Montage einer Halteanordnung für ein mobiles Endgerät gemäß Patentanspruch 11 sowie eine Verwendung einer Halteanordnung gemäß Patentanspruch 13 gelöst.

Die eingangs genannte Halteanordnung zur Halterung eines mobilen Endgeräts, wie z. B. eines Tablets, eines eBook-Readers oder dergleichen, oder gegebenenfalls auch eines Smartphones an einer Wandfläche, umfasst wie bereits erwähnt zumindest eine erste Halterung und zweite Halterung. Die zweite Halterung ist im Wesentlichen spiegelsymmetrisch zur ersten Halterung ausgebildet.

Dabei weisen die Halterungen jeweils eine Rückwand, eine sich im Wesentlichen entlang der Rückwand erstreckende Vorderwand und einen sich zwischen Vorderwand und Rückwand erstreckenden Boden auf. Unter Wänden werden im Allgemeinen senkrecht aufgeführte Bauteile als seitliche Begrenzung eines Raumes verstanden. Angelehnt an diese Definition, wobei der Raum hier ein Bauteil ist, sind hier mit den Wänden, also z. B. den Rückwänden sowie Vorderwänden teilweise umschließende Teile bzw. Bauteile der Halterungen der Halteanordnung gemeint. Unter Boden wird hier zunächst einfach eine weitere räumliche Begrenzung zur Verbindung der Vorderwände mit den Rückwänden verstanden, welche jeweils in Bezug auf eine bestimmungsgemäße Anordnung der Vorder- und Rückwände an einem unteren Endabschnitt der betreffenden Wände angeordnet ist bzw. mit diesen verbunden ist. Bevorzugt kann der Boden jeweils zwei winklig zueinander angeordnete Wandabschnitte bzw. Bodenabschnitte umfassen, welche die Vorderwände mit den Rückwänden an den unteren Endabschnitten verbinden, wie weiter unten noch genauer erläutert wird. Die genauere Ausgestaltung des Bodens wird weiter unten noch erläutert. Relative Richtungsangaben wie "oben", "unten", "oberseitig", "unterseitig", "seitlich bzw. links/rechts", "horizontal", "vertikal", "vorne", "hinten" etc. beziehen sich im Übrigen hierbei, wie auch in der gesamten Schrift, auf die Darstellung in den Figuren, welche Darstellung eine bevorzugt vorgesehene, jedoch nicht einzig darauf beschränkte Orientierung der Halteanordnung im Hochformat wiedergibt. Beispielsweise könnten die Halterungen theoretisch auch im Querformat, sprich "liegend" an einer Wandfläche angebracht werden.

Weiter bilden dabei die Vorderwand, die Rückwand und der Boden der ersten Halterung und der zweiten Halterung jeweils eine Aufnahme zur Unterbringung bzw. zum Halten von beispielsweise Eckkantenbereichen eines mobilen Endgeräts. Bei der Aufnahme kann es sich beispielsweise um einen V-förmig, nach oben geöffneten Raum bzw. eine Art "Mulde" handeln, welche sich nach oben hin wiederum tendenziell schlitzförmig verkleinert.

Erfindungsgemäß weist die Rückwand jeweils eine von der Vorderwand abgewandte hintere Verankerungsmodulhaltefläche mit jeweils zumindest einer Verankerungsmodulaufnahme auf. Rückseitig zur hinteren Verankerungsmodulhaltefläche, also auf der Vorderseite kann die Rückwand z. B. eine vordere Oberfläche aufweisen, welche plan bzw. eben sein kann und um das mobile Endgerät noch sicherer zu halten, z. B. mit einer rutschhemmenden Beschichtung versehen sein kann. Weiterhin können in der vorderen Oberfläche Schlitze, Aussparungen oder dergleichen eingebracht, also z. B. integriert bzw. versenkt sein, wie weiter unten noch erläutert wird.

Ferner umfasst die Halteanordnung erfindungsgemäß zumindest ein erstes Verankerungsmodul und zumindest ein zweites Verankerungsmodul. Die Verankerungsmodule bzw. Verankerungsadapter helfen beispielsweise bei der Ausrichtung der Halterungen an ein Maß eines zu haltenden mobilen Endgeräts und der darauffolgenden Montage an einer Wandfläche.

Dabei weisen die Verankerungsmodule erfindungsgemäß eine Vorderseite mit einer Halterungskupplung und eine Rückseite mit einer Wandhalterungsfläche auf. Die Halterungskupplung dient der Kopplung mit einer jeweiligen Halterung, die Wandhalterungsfläche der Anbringung an einer Wand bzw. Wandfläche.

Erfindungsgemäß wirkt dabei zudem in einem bestimmungsgemäß gekoppelten Zustand einer Halterung mit einem Verankerungsmodul die Verankerungsmodulaufnahme an der Rückwand der Halterung mit der Halterungskupplung an der Vorderseite des Verankerungsmoduls zusammen. Verschiedene bevorzugte Varianten des Zusammenwirkens werden später noch erläutert.

Ein erfindungsgemäßes Verfahren zur Montage einer solchen Halteanordnung für ein mobiles Endgerät an einer Wandfläche umfasst dementsprechend zumindest die folgenden Schritte:
Zunächst wird in einem Schritt ein erstes Verankerungsmodul und ein zweites Verankerungsmodul derart an einer Wandfläche angebracht, dass eine Längskante des ersten Verankerungsmoduls und eine Längskante des zweiten Verankerungsmoduls im Wesentlichen parallel zueinander angeordnet sind und dass eine Oberkante des ersten Verankerungsmoduls und eine Oberkante des zweiten Verankerungsmoduls im Wesentlichen in einer Flucht liegen.

Anschließend wird in einem weiteren Schritt jeweils eine Halterung mit jeweils einem der Verankerungsmodule gekoppelt, welche Halterungen wie oben bereits erwähnt jeweils eine Rückwand, eine sich im Wesentlichen entlang der Rückwand erstreckende Vorderwand und eine sich zwischen Vorderwand und Rückwand erstreckende Unterseite aufweisen, so dass die Vorderwand, die Rückwand und die Unterseite der ersten Halterung und der zweiten Halterung jeweils eine Aufnahme bilden. Diese Aufnahme kann wieder beispielsweise V-förmig, nach oben geöffnet zum Einschieben eines mobilen Endgerätes ausgebildet sein.

Hierzu weist die Rückwand der Halterung wie erwähnt jeweils an einer von der Vorderwand abgewandten hinteren Verankerungsmodulhaltefläche zumindest eine Verankerungsmodulaufnahme auf, welche zur Kopplung mit einem Verankerungsmodul mit einer Halterungskupplung an einer Vorderseite des Verankerungsmoduls zusammenwirkt. Weitere bevorzugte Verfahrensschritte werden ebenso später noch erläutert.

Durch die erfindungsgemäße Verwendung einer Halteanordnung zur Montage eines mobilen Endgeräts an einer Wandfläche hat ein Nutzer während einer Arbeit bzw. Aktion, für die er ein mobiles Endgerät benötigt, eine gute Sicht auf das mobile Endgerät. Dabei hat ein Nutzer oft nur eingeschränkt Platz zur Verfügung, weshalb er das mobile Endgerät nicht direkt auf einer Arbeitsfläche gebrauchen kann, da es dort beispielsweise nass oder schmutzig werden könnte und/oder einfach im Weg umgeht. Zudem hat er jederzeit Zugriff auf das mobile Endgerät. In der Halteanordnung ist es nämlich besonders sicher und stabil angeordnet bzw. verstaut, womit es nicht (wie sonst auf der Arbeitsfläche) stört, verschmutzt oder nass wird. Zudem kann er es für andere Arbeiten bzw. Aktionen, z. B. in einem Nebenraum, sehr leicht und schnell wieder aus der Halteanordnung entnehmen und dort verwenden und bei Bedarf problemlos anschließend beispielsweise wiederum sehr schnell und einfach wiederum sicher in der Halteanordnung anordnen, um erneut der ersten Arbeit bzw. Tätigkeit nachzugehen. Ein Tätigkeitsfeld bzw. -bereich, für welche(n) die Erfindung dabei beispielsweise besonders geeignet ist, stellt das Kochen bzw. die Küche dar, in welchem Bereich-ob professionell oder privat - vermehrt unter Einsatz von Tablets oder vergleichbaren elektronischen Geräten mit Rezepten aus dem Internet gekocht wird und/ oder um beispielsweise Musik beim Kochen abzuspielen. Z. B. bietet es sich in der Küche an, die Halteanordnung oberhalb einer Arbeitsplatte neben dem Herd anzubringen, so dass der Nutzer jederzeit gute Sicht auf das mobile Endgerät, z. B. mit geöffnetem Rezept hat.

Weiterhin sorgt die zweiteilige erfindungsgemäße Konstruktion dafür, dass die Montage der Halteanordnung stark vereinfacht wird, da ein gerätespezifischer Abstand der beiden einzelnen Halterungen zueinander bei der Montage nicht erst kompliziert an der Wandfläche ausgemessen und angezeichnet werden muss. Das mobile Endgerät kann dazu einfach für die Erstmontage der Halteanordnung in die Halteanordnung eingeschoben werden, die Halteanordnung daraufhin mit der Wandhalterungsfläche der Verankerungsmodule zur Wandfläche zeigend an der Wandfläche, beispielsweise durch leichtes Andrücken von klebenden Haftstreifen (nach Abziehen einer Schutzfolie der Haftstreifen) an die Wandfläche, vorfixiert werden und dann die Halterungen relativ zu den leicht an der Wandfläche haftenden Verankerungsmodulen durch relatives Verschieben der Halterungen zu den Verankerungsmodulen gelöst werden. Schließlich können die Verankerungsmodule separat beispielsweise mittels üblicher Befestigungsmittel, wie z. B. je nach Wandfläche durch Bohren von Bohrlöchern, Einsetzen von Dübeln und Einschrauben von Schraubmitteln lösbar sehr fest und sicher an einer Wandfläche befestigt werden. Im Unterschied zum Stand der Technik sind anschließend jedoch die Befestigungsmittel durch die Halterungen vollständig verdeckt, d. h. es sind weder Schraubenköpfe noch Dübel noch Schraubenlöcher oder Schlitze sichtbar. Dies ist auch dann noch der Fall, wenn gerade kein mobiles Endgerät in der Halteanordnung gehalten wird. Bei Verwendung von auf Zug entklebenden Haft- bzw. Klebestreifen mit einer Abziehlasche bleibt im Stand der Technik zudem in jedem Fall die Abziehlasche stets unschön sichtbar. Gerade diese Tatsache macht die Konstruktion der Halteanordnung aber besonders praktisch, denn so werden die beiden Halterungen der Halteanordnung im ungenutzten Zustand nicht als störend empfunden, sondern fügen sich mit ihrem minimalistischen, glatten und modernen Design unauffällig in die Umgebung ein.

Zusätzlich ist die zweiteilige Konstruktion aus den Halterungen, welche eine Art Aufbau darstellen und der flachen Unterkonstruktion aus den im Wesentlichen "Plättchen" förmigen Verankerungsmodulen aber auch unproblematisch optisch zu verstecken, sofern dies gewünscht ist. So kann ein Nutzer, der die Halteanordnung z. B. wenn dann, nur selten braucht, sich ansonsten aber an den dauerhaft an der Wandfläche befindlichen Halterungen (ohne Tablet etc.) der Halteanordnung stört, einfach die Halterungen aus den Verankerungsmodulen entkoppeln und z. B. einen Bilderrahmen, einen Spiegel oder dergleichen über die sehr flachen an der Wandfläche verbliebenen Verankerungsmodule hängen. Beispielsweise könnten hierfür die weiter unten noch beschriebenen Federelemente an den Oberkanten der Verankerungsmodule zum Aufhängen des Objekts genutzt werden, z. B. wenn das Objekt ein Bilderrahmen mit einer Schnurbefestigung ist, welche ansonsten über einen Nagel oder eine Schraube in der Wand gespannt wird. Wann immer der Nutzer dann die Halteanordnung beispielsweise zum Anschauen eines Films etc. verwenden möchte, kann er einfach innerhalb weniger Handgriffe das darüber gehängte Objekt abnehmen, die Halterungen in die Verankerungsmodule einkoppeln und das Tablet einschieben.

Des Weiteren ist die zweiteilige Konstruktion aus Halterungen und Verankerungsmodulen aber nicht nur optisch ansprechend, indem sie den gesamten Verankerungsteil in der Wand verdeckt. Vielmehr lassen sich die Halterungen im montierten Zustand der Halteanordnung auch blitzschnell von den Verankerungsmodulen lösen, um die Halterungen reinigen zu können. Die Halterungen können damit sehr einfach und effektiv von Staub und/oder hartnäckigen Fettsablagerungen (insbesondere bei Verwendung in der Küche) etc. gereinigt werden, z. B. im Waschbecken vollständig unter Wasser. Vorzugsweise können die Halterungen der Halteanordnung hierzu aus einem Material gefertigt sein, das spülmaschinengeeignet, besonders bevorzugt spülmaschinenfest ist, so dass die Halterungen besonders komfortabel in der Spülmaschine gewaschen werden können.

Weitere, besonders vorteilhafte Ausgestaltungen und Weiterbildungen der Erfindung ergeben sich aus den abhängigen Ansprüchen sowie der nachfolgenden Beschreibung, wobei die Ansprüche einer Anspruchskategorie auch analog zu den Ansprüchen und Beschreibungsteilen zu einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Für die Kopplung, also die Art des Zusammenwirkens zwischen den Halterungen und den Verankerungsmodulen gibt es verschiedene Möglichkeiten.

Beispielsweise können die Halterungen jeweils mittels einer drehbaren Kopplung in den Verankerungsmodulen verankerbar sein.

Vorzugsweise kann jeweils die betreffende Halterung mit ihrer Verankerungsmodulhaltefläche verschiebbar auf oder an dem betreffenden bzw. zugehörigen Verankerungsmodul angeordnet sein. Damit ist gemeint, dass eine betreffende Halterung relativ zum zugehörigen Verankerungsmodul zumindest leicht bewegt werden kann.

Besonders bevorzugt kann jeweils die betreffende Halterung mit ihrer Verankerungsmodulhaltefläche in einer Längsrichtung der Vorderwand und Rückwand der Halterung verschiebbar auf oder an dem betreffenden bzw. zugehörigen Verankerungsmodul angeordnet sein. Mittels der Verschiebbarkeit der Halterungen in Längsrichtung der Halterungen auf die Verankerungsmodule besteht mehr Spielraum die Bauteile relativ zueinander mit einer Mindestüberschneidung zueinander zu positionieren. Denn für eine stabile Kopplung der Halterungen mit den Verankerungsmodulen wird zumindest eine gewisse Überschneidung der Bauteile zueinander benötigt.

Dabei kann eine Halterung besonders bevorzugt in einem bestimmungsgemäß gekoppelten Zustand einer Halterung auf oder an dem Verankerungsmodul in einer Verankerungsstellung in Längsrichtung z. B. lösbar eingeschoben angeordnet bzw. montiert sein.

An dieser Stelle sei noch einmal betont, dass die Halterungen bevorzugt wie zuvor beschrieben einen rechteckigen Umriss aufweisen können. Diese Form passt optisch sehr gut zu den zumeist ebenfalls rechteckigen Endgeräten und ermöglicht wie erwähnt einen längeren Führungs- bzw. Halteabschnitt mittels der längeren Vorderwände sowie Rückwände entlang der Oberflächen des Endgeräts, also eine erhöhte Haltekraft durch einen längeren Hebelarm bzw. eine längere Vorderwand.

Im später noch gezeigten, bevorzugten Ausführungsbeispiel entspricht die Längsrichtung der Halterungen zugleich auch der Richtung der Schwerkraft, ohne die Erfindung auf diese spezifische Ausrichtung zu beschränken. Entsprechend ist mit der Längsrichtung bei einer bevorzugten Ausgestaltungsform der Halterungen eine Richtung vom Boden der Halterungen zur nach oben hin offenen Seite der Halterungen entgegen bzw. umgekehrt mit der Schwerkraft gemeint. Eine Anordnung mit der Längsrichtung als Verschieberichtung in Richtung der Schwerkraft hat den Vorteil, dass bei entsprechender Anordnung der Kopplungsvorgang, genauer gesagt der Einschubvorgang der Halterungen in bzw. auf die Verankerungsmodule durch die Schwerkraft unterstützt wird. Zusätzlich werden die Halterungen anschließend von selbst schwerkraftbedingt in der gekoppelten bzw. eingeschobenen Position gehalten, ohne dass eine Einrastung oder dergleichen von Nöten ist, um eine unbeabsichtigte relative Verschiebung aus dieser Betriebsposition gänzlich auszuschließen und absolut sicher zu gehen, dass sich die Bauteile nicht ungewollt, z. B. schleichend von Zeit zu Zeit aus dieser Betriebsposition lösen könnten.

Alternativ lassen sich die Halterungen beispielsweise auch liegend, d. h. mit einer horizontal verlaufenden Längsrichtung (senkrecht zur Richtung der Schwerkraft) anordnen, z. B. wenn das zu haltende Gerät nicht besonders hoch, dafür aber eher lang ist. Alternativ ginge auch eine zumindest leicht schräge Anordnung der Halterungen schräg zur Schwerkraft, also nicht ganz vertikal.

Alternativ zur Verschiebbarkeit in Längsrichtung kann beispielsweise jeweils eine Halterung in einer Querrichtung verschiebbar auf oder an dem Verankerungsmodul angeordnet sein, d. h. bei einem rechteckigen Aufbau der Halterungen, in einer kürzeren Erstreckungsrichtung der Halterungen. Die Querrichtung ist bei einer bevorzugten Anordnungsweise der Halterungen an einer Wand wie erwähnt bevorzugt horizontal ausgerichtet, da die Halterungen in der senkrecht dazu, vertikal verlaufenden Längsrichtung mehr Kippmoment des mobilen Endgeräts von der Wandfläche weg nach unten zum Boden aushalten müssen. Üblicherweise ist in dieser Richtung mehr Haltekraft von den Halterungen gefordert, um beispielsweise ein Endgerät, welches mit einer längeren Seite aufrecht in den Halterungen steht, daran zu hindern, dass es von der Wand weg nach vorne kippen kann, wenn es benutzt wird. Da das mobile Endgerät üblicherweise deutlich länger sein kann als die Längserstreckung der Halterungen in Längsrichtung der Halterungen, ist es bevorzugt die Halterungen so an einer Wandfläche ausgerichtet anzubringen, dass die Längsrichtung der Halterungen vertikal verläuft. Damit kann die Hebelkraft, welche durch das im Verhältnis zur Halterung längere Tablet auf die Halterung ausgeübt werden kann, verlässlicher aufgenommen werden.

Bei den vorhergehend beschriebenen Varianten kann es gegebenenfalls sinnvoll sein, zumindest eine leichte Einrastung in der Betriebsposition zwischen Halterung und Verankerungsmodul vorzusehen, da es zumindest theoretisch möglich ist, dass die Halterung z. B. relativ zum Verankerungsmodul seitlich oder schräg aus diesem herausrutscht. Vorzugsweise kann daher eine Halterung in einem bestimmungsgemäß gekoppelten Zustand einer Halterung auf oder an dem Verankerungsmodul in einer Verankerungsstellung in Querrichtung z. B. lösbar mittels Rastmitteln eingeschoben angeordnet bzw. montiert sein.

Hinsichtlich möglicher Beschädigungsquellen sei darauf verwiesen, dass ein Schaden aufgrund der Kippkraft des Tablets zwar grundsätzlich möglich ist (da die Vorderwand ja nur über den Boden mit der Rückwand verbunden ist), vermutlich jedoch nur aufgrund von Vorschäden auftreten würde. Viel wahrscheinlicher erscheint ein Schaden aufgrund von unsachgemäßer Entnahme des Tablets aus den Halterungen durch einen Nutzer oder aufgrund zu starker relativer Abspreizung der Vorderwände zu den Rückwänden beim Einschieben eines Endgeräts - man denke an ein zu dickes Endgerät, welches die vorgesehene Maximaldicke überschreitet, z. B. weil es zusätzlich in eine außergewöhnlich dicke Tablet-Hülle gehüllt ist.

Hält die Konstruktion dem Einschieben des Tablets in die Halterungen nämlich Stand, ist sie in der Regel auch stabil genug ein Tablet zu halten, das oben von der Wand wegkippt, z. B. weil die Halteanordnung an einer leicht überhängenden Wandfläche montiert wurde, und damit auf die Vorderwände drückt bzw. die Vorderwände von den Rückwänden wegspreizt. Möglichkeiten, unter anderem zur Verhinderung eines Abbrechens der Vorderwände bzw. des Bodens von den Rückwänden werden weiter unten noch erläutert.

Um ein seitliches Herausrutschen eines mobilen Endgeräts abzusichern, können die Halterungen vorzugsweise jeweils zumindest einen seitlichen Außenanschlag aufweisen. Dieser kann sich zwischen Vorderwand und Rückwand, senkrecht zur besagten Längsrichtung, d. h. in den Raum bzw. parallel zu einer Blickrichtung von vorne auf den Bildschirm des mobilen Endgeräts, erstrecken. Unter einem solchen Außenanschlag sind ein oder mehrere Wandabschnitte zu verstehen, die sich jeweils zumindest abschnittsweise zwischen Vorderwand und Rückwand hauptsächlich senkrecht zur Querrichtung sowie Längsrichtung erstrecken und welche die Halterungen damit auf voneinander abgewandten Außenseiten zusätzlich seitlich begrenzen. Zudem lässt sich somit ein zu haltendes mobiles Endgerät seitlich, nämlich rechts und links in seiner Positionierung in den Halterungen in gewisser Weise festlegen, so dass das mobile Endgerät nach dem Einstecken bzw. Einschieben in die Halterungen bereits automatisch relativ mittig, recht gleichmäßig in den Halterungen sitzt bzw. auf den Halterungen aufliegt.

Um die oben erwähnte Konstruktion aus Rückwand, Vorderwand und Boden (vereinfacht gesprochen) dazwischen zusätzlich auch noch zu versteifen, kann sich der Außenanschlag durchgehend zwischen Vorderwand und Rückwand seitlich, parallel zum Boden, d. h. in einer Tiefenrichtung in den Raum hinein bzw. auf die Wandfläche zu erstrecken. Je höher der Außenanschlag dabei zwischen Vorderwand und Rückwand ausgebildet ist, desto mehr Spreizung hält die Konstruktion Stand. Um die Flexibilität der Konstruktion aus Rückwand, Vorderwand und Boden zu erhöhen, kann der Außenanschlag aus einem Material und/oder in einer Überlänge ausgebildet werden, so dass er sich bei einer Abspreizung der Vorderwände von den Rückwänden zunächst einmal dehnt und/oder spannt und dann erst verzögert anschlägt.

Vorzugsweise kann der Außenanschlag eine Eckkantenversteifung bzw. einen Verbindungssteg zwischen Vorderwand und Rückwand senkrecht zur Aufnahme umfassen, welche bzw. welcher die, z. B. V-förmigen, Aufnahmen der Halterungen jeweils nach außen hin abgrenzt und auf diese Weise versteift.

Alternativ oder zusätzlich kann der Außenanschlag eine Spreizbegrenzung umfassen. Mit einer Spreizbegrenzung sind Mittel zur Begrenzung des Spreizwinkels der Vorderwände weg von den Rückwänden gemeint, welche die Spreizung auf einen maximalen Öffnungswinkel beschränken, wie z. B. ein lockeres, unelastisches Band, das an beiden Wänden befestigt ist oder ein elastisch bis zu einem gewissen Grad entfaltbares Element oder ähnliches.

Vorzugsweise kann die Spreizbegrenzung eine umgreifende bzw. hintergreifende Hakenanordnung umfassen. Unter einer um- bzw. hintergreifenden Hakenanordnung ist im weitesten Sinne ein hakenförmiges Bauteil zu verstehen, welches durch Einhaken auf Zug bzw. Hängenbleiben an einem anderen Wandabschnitt oder dergleichen eine weitere Bewegung, hier im Sinne einer Aufspreizung der Vorderwände weg von den Rückwänden, zwangsläufig verhindert.

Besonders bevorzugt kann die Hakenanordnung als ineinandergreifende, zweiteilige Hakenanordnung ausgebildet sein. Konkret ist darunter beispielsweise ein untergreifender Haken fix bzw. fest an der Vorderwand und ein übergreifender Haken gespiegelt dazu an der Rückwand zu verstehen, oder umgekehrt. In Summe greifen die beiden Haken dann entsprechend ineinander. Alternativ könnten sich die Haken aber genauso auch seitlich hintergreifen und damit ineinandergreifen. Sind die Haken aus einem flexiblen bzw. etwas nachgiebigen Material gefertigt und/oder entsprechend geformt erlaubt dies noch ein gewisses Spiel bei der Aufspreizung.

Mit einer solchen Hakenanordnung wird erreicht, dass eine relative Auseinanderspreizung zwischen einer jeweiligen Vorderwand und Rückwand, welche ein vorher ermitteltes, material- bzw. konstruktionsbedingtes Belastungslimit der Halterungen überschreiten würde, schlichtweg verhindert wird. Dies erfolgt, indem zwei Haken der Hakenanordnung aneinander anschlagen, d. h. sich gegenseitig blockieren bzw. einhaken und damit den Grad der Aufspreizung der Wände begrenzen.

Ganz besonders bevorzugt kann der Außenanschlag in einem entspannten Zustand ohne ein zu haltendes mobiles Endgerät eine voneinander beabstandete, ineinandergreifende Hakenanordnung umfassen. Bei einer voneinander beabstandeten Hakenanordnung - z. B. mit zwei in einem Abstand zueinander angeordneten Haken, die innerhalb des Abstands materialunabhängig zueinander bewegbar sind - wird eine über den Abstand hinausgehende Relativbewegung aneinander vorbei stets durch gegenseitiges Einhaken verhindert. Auf diese Weise kann ein mögliches Überschreiten einer material- und/oder konstruktionsbedingten Belastungsgrenze effektiv verhindert werden.

Mit einer solchen Hakenanordnung wird aber auch erreicht, dass eine gewisse Auf- bzw. Abspreizung der Vorderwände der Halterungen relativ zu den Rückwänden, z. B. aufgrund einer gewissen Endgerätedicke eines mobilen Endgerätes, welches dazwischen eingeschoben wird, erst ab bzw. nach einer gewissen "Verzögerungsstrecke" bzw. Maximaldicke ein weiteres Auf- bzw. Abspreizen der Vorderwände über diese Verzögerungsstrecke hinaus verhindert wird. D. h. es ist möglich verschieden dicke Endgeräte bis zu einer gewissen Maximaldicke sicher in die Halteanordnung einzuschieben und damit zu halten. Dies hat den Vorteil, dass sowohl dünne Endgeräte als auch dickere Endgeräte gleichermaßen sicher und stabil ruckelfrei gehalten werden können.

Weiter bevorzugt kann die ineinandergreifende Hakenanordnung je einen von den Rückwänden zu den Vorderwänden und einen von den Vorderwänden zu den Rückwänden, gespiegelt angeordneten, abstehenden Haken aufweisen. Die Haken sind dabei sowohl zwischen sich an der hakeninnenseitigen Hakenfläche voneinander beabstandet als auch an den hakenaußenseitigen Seiten, die zur jeweils gegenüberliegenden Wand gewandt sind. Eine derartige Hakenanordnung begrenzt nicht nur den Grad der Aufspreizung der Vorderwände zu den Rückwänden, sondern sie begrenzt zugleich auch den maximalen Druck in der Gegenrichtung, also in der Richtung der Wände aufeinander zu und damit auch auf ein dazwischen eingeschobenes Endgerät. Damit können extreme Bewegungen in beiden Richtungen ausgeschlossen werden, womit die Haltbarkeit der Halterungen der Halteanordnung gesteigert werden kann.

Vorzugsweise können die Vorderwände und die Rückwände der Halterungen der Halteanordnung so geformt sein, dass von ihnen eine Klemmwirkung auf ein zwischen ihnen eingeschobenes Tablet ausgeht, also ein bestimmungsgemäß eingeschobenes Tablet dazwischen eingeklemmt bzw. sicher gehalten wird.

Vorzugsweise können die Halterungen an der bereits erwähnten Verankerungsmodulhaltefläche der Rückwand jeweils zumindest einen Führungssteg, z. B. mit einer Anschlagkante für ein betreffendes Verankerungsmodul zur Kopplung eines jeweiligen bzw. des der jeweiligen Halterung zugeordneten Verankerungsmoduls aufweisen. Besonders bevorzugt können die Halterungen zwei Führungsstege aufweisen, welche ganz besonders bevorzugt im Wesentlichen senkrecht zu einer Oberkante und/oder Unterkante der Rückwand an der Verankerungsmodulhaltefläche der Rückwand angeordnet sein können.

Dabei können die Führungsstege vorzugsweise zumindest eine Hinterschneidung aufweisen. Besonders bevorzugt können die Führungsstege dabei eine in Längsrichtung verlaufende Nut bilden, welche sich z. B. im Wesentlichen entlang der Anschlagkante erstreckt.

Bei der DE 11 2021 005 160 B4, welche wie eingangs erwähnt ebenfalls eine Halteanordnung betrifft, ist die Halteanordnung so an einer Wand angeordnet, dass sie nur eine elektronische Vorrichtung mit einer entsprechenden Abmessung in sich aufnehmen kann. Mobile Endgeräte, wie insbesondere Tablets unterscheiden sich aber mitunter stark in ihren Außenabmessungen. So gibt es Tablets in den verschiedensten Größen, beispielsweise mit 7-, 8-, 9-Zoll Bildschirmdiagonale, aber auch z. B. Tablets mit 12-, 13-, 14-Zoll Bildschirmdiagonale etc. Soll nun beispielsweise eine elektronische Vorrichtung mit einer anderen Abmessung oder die gleiche Vorrichtung nur in einer anderen Ausrichtung von der Halterung aufgenommen werden, so müssen erst die Halterungen von der Wand entfernt werden. Die Rückseiten der Halterungen müssen gesäubert werden und neue Klebestreifen müssen daraufhin an den Rückseiten angebracht werden. Das neu aufzunehmende mobile Endgerät muss vermessen werden und die Halterungen dementsprechend mittels der Klebestreifen abermals an einer entsprechenden Wand befestigt werden. Es ist also sehr umständlich und zeitintensiv die Halteanordnung an unterschiedliche Abmessungen einer aufzunehmenden Vorrichtung anzupassen. Bei dem Ausmessen des mobilen Endgeräts und dem darauffolgenden Anbringen der Halterungen kann es zudem leicht zu Ungenauigkeiten kommen, was zur Folge haben kann, dass das mobile Endgerät nicht stabil in der Halteanordnung gehalten werden kann. Unter Umständen kann das mobile Endgerät sogar gar nicht von dieser aufgenommen werden. Wird ein Tablet aber nicht sicher in einer Halterung gehalten, kann dies vor allem bei der Bedienung des Touchpads des Tablets als sehr störend empfunden werden, wenn sich das mobile Endgerät bei einer Betätigung des Touchpads mitbewegt oder es zu einem "Klappern" in der Halteanordnung kommt.

Um mit der Halteanordnung ein mobiles Endgerät komfortabel und sicher halten zu können und die Halteanordnung zudem schnell und flexibel an unterschiedliche Abmessungen eines aufzunehmenden mobilen Endgeräts anpassen zu können, gibt es verschiedene Möglichkeiten.

Vorzugsweise können die Halterungen jeweils zumindest einen Raststeg und die Verankerungsmodule können vorzugsweise zumindest eine Rastaussparung aufweisen. Bei dem Raststeg kann es sich z. B. um "Zinnen" bzw. Rastnasen handeln, welche von der Oberfläche der Halterungen an geeigneten Stellen hervorstehen.

Dabei kann der Raststeg der Halterungen vorzugsweise mit der Rastaussparung der Verankerungsmodule in einer bestimmungsgemäß gekoppelten Stellung zusammenwirken. Damit ist z. B. gemeint, dass die Raststege in Rastaussparungen eingreifen, um die Halterungen und Verankerungsmodule bei einer Montage zueinander auszurichten.

Dabei können sich die Raststege besonders bevorzugt senkrecht zur Querrichtung, also in Längsrichtung erstrecken. Mittels mehrerer paralleler Rastaussparungen, die in Querrichtung nebeneinander in den Halterungen ausgebildet sind, können so unterschiedliche Rastpositionen in Querrichtung gewählt werden, womit ein lichtes Innenmaß zwischen den Halterungen bei Bedarf nachjustiert werden kann. Dies ist insbesondere dann von Vorteil, wenn z. B. mehrere leicht hinsichtlich der Außenabmessungen voneinander abweichende Tablets, beispielsweise unterschiedlicher Hersteller mit der Halteanordnung verwendet werden sollen.

Vorzugsweise können die Verankerungsmodule jeweils zumindest ein Federelement, besonders bevorzugt zwei Federelemente, aufweisen, welche an einer Längskante, einer Oberkante und/oder einer Unterkante des Verankerungsmoduls angeordnet sind.

Dabei können die Federelemente der Verankerungsmodule mit den Hinterschneidungen der oben bereits erwähnten Führungsstege der Halterungen in einer bestimmungsgemäß gekoppelten Stellung, z. B. eine "Einrastung" bewirkend, zusammenwirken.

Vorzugsweise können die Halterungen jeweils zumindest eine federnde Zunge mit einer Zungenspitze und einer Zungenwurzel aufweisen, auf welcher der besagte Raststeg einer jeweiligen Halterung angeordnet ist. Dies ermöglicht eine sehr nutzerfreundliche Betätigung, indem der Raststeg z. B. sehr einfach ohne Hilfsmittel mittels einer leichten Zug- oder Druckbewegung mit einem Finger aus einer Rastaussparung gelöst und nach einer kurzen relativen Verschiebung des Raststegs der Raststeg beispielsweise in eine andere Rastaussparung daneben eingerastet bzw. eingeklickt werden kann.

Vorzugsweise kann die Zungenspitze im Wesentlichen fluchtend mit einer Seitenkante der Rückwand abschließen, welche Seitenkante sich parallel zum Außenanschlag auf einer vom Außenanschlag abgewandten Seite der Rückwand erstreckt.

Alternativ kann die Zungenspitze im Wesentlichen fluchtend mit einer Unterkante, welche sich zwischen einer Unterseite und einer Rückwand einer Halterung erstreckt, abschließen.

Mit den zuvor beschriebenen konstruktiven Weiterbildungen können also nun auch mobile Endgeräte verschiedener Abmessungen, insbesondere unterschiedlich dicke mobile Endgeräte problemlos in der Halteanordnung aufgenommen bzw. verwendet werden. Dies ermöglicht es, verschiedene mobile Endgeräte in einer bereits montierten Halteanordnung einsetzen zu können, ohne die Halteanordnung zwischendurch komplett demontieren und wieder montieren zu müssen. Gerade im häuslichen Gebrauch, beispielsweise in einem Mehrpersonenhaushalt, wie z. B. einer Familie oder einer Wohngemeinschaft, in dem mehrere Personen oftmals zumindest ein mobiles Endgerät besitzen, ist dies besonders praktisch und lohnend. So können sich mehrere Personen abwechselnd die Halteanordnung für ihr jeweiliges mobiles Endgerät teilen. Z. B. könnte eine Halteanordnung in der Küche zur Verwendung eines Tablets beim Kochen und eine weitere Halteanordnung z. B. oberhalb einer Badewanne zum Anschauen eines Films oder einer Serie, angebracht sein. Auch die Problematik, dass sich heutzutage mit jeder neuen Generation die Abmessungen der Endgeräte leicht verändern, kann so unproblematisch gelöst werden.

Die aus der Praxis bekannten Halteanordnungen, welche ein Tablet oder dergleichen an einer Wand halten, werden typischerweise direkt mittels Schrauben oder den oben genannten Klebestreifen an einer Wand befestigt. Wenn sich dann kein Tablet in der Halterung befindet, sind bei einer Befestigung mit Schrauben oftmals zumindest die Schraubenköpfe in der Halterung sichtbar und bei einer Befestigung mit Klebestreifen mit Abziehlaschen stehen die Abziehlasche unschön hervor. Dies kann aber vor allem im Wohnbereich als unästhetisch und störend empfunden werden. Ein Anpassen des Tablet-Halters an eine andere Abmessung, z. B. die eines anderen Tablets, ist dabei nur durch ein Setzen neuer entsprechender Bohrungen oder Klebestreifen in bzw. an einer Wand möglich.

Vorzugsweise kann die Halteanordnung zumindest zwei Befestigungsmittel für eine Montage der Verankerungsmodule an einer Wandfläche umfassen.

Die Befestigungsmittel können vorzugsweise Haftstreifen umfassen.

Dabei kann vorzugsweise jeweils zumindest ein Haftstreifen zur Anordnung auf einer, bevorzugt planen, Wandhalterungsfläche einer Rückseite eines Verankerungsmoduls anzuordnen oder angeordnet sein. Anzuordnen meint, dass die Haftstreifen nicht zwangsläufig bereits auf den Verankerungsmodulen aufgebracht sein müssen. Sie können beispielsweise auch separat mitgeliefert werden, so dass der Nutzer bzw. Kunde je nach Ausgestaltung der Verankerungsmodule selber entscheiden kann, ob er diese verwendet oder beispielsweise eine andere Befestigungsart wählt, z. B. wie nachfolgend erläutert.

Besonders bevorzugt können die Befestigungsmittel auf Zug entklebende Haftstreifen mit je einer Abziehlasche umfassen, um die Haftstreifen auch wieder rückstandsfrei sehr leicht von einer im Wesentlichen glatten Wandfläche entfernen zu können.

Alternativ oder zusätzlich können die Verankerungsmodule zumindest eine Öffnung bzw. Durchgangsbohrung aufweisen und die Befestigungsmittel können vorzugsweise Schraubmittel wie z. B. Schrauben, Dübel etc. umfassen, um die Verankerungsmodule mithilfe von Bohrlöchern in der Wandfläche noch sicherer, insbesondere bei wechselnden, klimatisch heißen sowie besonders feuchten Raumbedingungen auf lange Sicht stabil befestigen zu können.

Besonders bevorzugt können die Verankerungsmodule zumindest je eine Langlochbohrung aufweisen. Langlochbohrungen helfen bei der Montage, da sie eventuell leicht verrutschte bzw. nicht ganz präzise positionierte Bohrlöcher verzeihen, indem die Verankerungsmodule nah Einbringung der Bohrungen in der Wandfläche mithilfe der Langlochbohrungen jeweils relativ zu den Schraubmitteln in Längserstreckungsrichtung der Langlochbohrungen bei der Anbringung der Schraubmittel nachjustiert bzw. leicht verschoben positioniert werden können. Dies ist gerade dann von Vorteil, falls die Verankerungsmodule z. B. ohne Verwendung klebender Haftstreifen zur Vorfixierung beim Bohren angebracht werden. Ganz besonders bevorzugt können die Langlochbohrungen für das erste Verankerungsmodul und das zweite Verankerungsmodul dabei auch noch unterschiedlich ausgerichtet sein, z. B. senkrecht zueinander, um z. B. die Verankerungsmodule nachträglich nach Einbringung der Löcher in der Wandfläche noch im Wasser ausrichten zu können. Dadurch müssen die Bohrungen vorteilhafterweise auch nicht exakt auf einer horizontalen Linie in die Wandfläche eingebracht werden, damit das mobile Endgerät später gerade gehalten wird bzw. "hängt".

Die Durchgangsbohrungen bzw. Öffnungen und Schrauben sind so ausgebildet bzw. gewählt, dass ein jeweiliger Schraubenkopf einer Schraube im bestimmungsgemäßen Zustand im Verankerungsmodul versenkt ist, also nicht störend hervorsteht.

Vorzugsweise kann die Verankerungsmodulaufnahme der Rückwand so ausgebildet sein, dass im bestimmungsgemäß gekoppelten Zustand der Halterungen mit den Verankerungsmodulen zwischen der Verankerungsmodulaufnahme an der Rückwand der Halterungen und der Halterungskupplung an der Vorderseite der Verankerungsmodule eine Kavität für bzw. zur Unterbringung zumindest einer Abziehlasche eines Haftstreifens verbleibt.

Alternativ oder zusätzlich können die Verankerungsmodule so ausgebildet sein, dass im bestimmungsgemäß gekoppelten Zustand der Halterungen mit den Verankerungsmodulen zwischen der Verankerungsmodulaufnahme an der Rückwand der Halterungen und der Halterungskupplung an der Vorderseite der Verankerungsmodule für bzw. zur Unterbringung derselben eine Kavität verbleibt.

Dabei können vorzugsweise die Verankerungsmodule in den Vorderseiten jeweils eine zungenförmige Flächenaussparung aufweisen, welche sich, besonders bevorzugt zungenförmig, von einer Oberkante beginnend in der Vorderseite, z. B. in etwa eine typische (geschnittene) Daumennagellänge lang und gegebenenfalls entsprechender Form, in Richtung gegenüberliegende Unterkante der Vorderseite erstreckt. Die Flächenaussparung kann dabei vorteilhafterweise ca. 1 bis 2 mm tief, zumindest jedoch haftstreifenstark bzw. -dick, d. h. die Stärke bzw. Dicke eines Haftstreifens aufweisend, ausgespart sein.

Bei einem Haftstreifen mit einer Abziehlasche, besonders bevorzugt an einer Oberkante des Verankerungsmoduls, kann sich die Abziehlasche über das Verankerungsmodul bzw. eine Längserstreckung des Verankerungsmoduls hinaus erstrecken. Dies erleichtert das Greifen der Abziehlasche mit den Fingern und hilft, den Haftstreifen wieder bequem von einer Wandfläche abziehen zu können. Damit ist für eine besonders nutzerfreundliche Demontage gesorgt, welche bei einer einfachen Anbringung der Verankerungsmodule an einer Wandfläche ohne Einbringung von Bohrlöchern in der Wand sogar eine vollständig rückstandsfreie Wandfläche hinterlässt.

Die oben genannte Ausgestaltung mit einer Kavität bzw. Flächenaussparung kann dann die Abziehlasche im bestimmungsgemäßen Zustand um die Oberkante des Verankerungsmoduls herum in die dafür vorgesehene, z. B. zungenförmige, Flächenaussparung bzw. die Kavität zwischen Vorderseite und Rückwand der Halterungen umgeklappt sein. Damit lässt sich die Abziehlasche bis zu einem möglichen Wiederablösen der Verankerungsmodule von einer Wandfläche praktisch verstauen. Während des Gebrauchs der Halteanordnung an einer Wandfläche ist die Abziehlasche also nicht nur optisch, sondern auch physisch versteckt verstaut und beeinträchtigt so nicht das Gesamtbild der Halteanordnung, z. B., wenn gerade einmal kein Tablet in der Halteanordnung eingesetzt ist.

Wie bereits erwähnt lassen sich mit den Abziehlaschen von auf Zug entklebenden Haftstreifen die Haftstreifen rückstandsfrei durch Zug an der Abziehlasche wieder von einer Oberfläche einer Wandfläche lösen, indem die Haftwirkung des Haftstreifens durch das Ziehen parallel zur Oberfläche aufgehoben wird.

Wie bereits ausführlich erläutert weisen die Halterungen jeweils eine Rückwand, eine sich im Wesentlichen entlang der Rückwand erstreckende Vorderwand und einen Boden auf, der sich untenseitig zwischen Vorderwand und Rückwand erstreckt und jeweils die Vorderwand und Rückwand verbindet, um so eine Aufnahme für eine Ecke des Endgeräts zu bilden.

Besonders bevorzugt kann dabei der Boden einen an die Rückwand angrenzenden ersten Bodenabschnitt, der im Wesentlichen schräg zur Rückwand angeordnet ist, und einen an die Vorderwand angrenzenden zweiten Bodenabschnitt aufweisen, der im Wesentlichen schräg zur Vorderwand angeordnet ist.

Ganz besonders bevorzugt laufen dabei ferner die beiden Bodenabschnitte V-förmig aufeinander zu. Bevorzugte Schrägstellungen bzw. Winkel hierzu werden weiter unten noch erläutert.

Mit einer solchen Konstruktion wird insbesondere erreicht, dass das mobile Endgerät in einer Position in den Halterungen der Halteanordnung sehr sicher und wackelfrei in dem "trichterartigen" Bodenbereich gehalten wird, so dass das mobile Endgerät bei einer Bedienung durch den Nutzer, z. B. beim Eintippen eines Suchbegriffs oder beim Navigieren auf einer geöffneten Seite etc. nicht in der Halteanordnung vor und zurück wackelt oder sich seitlich in den Halterungen verschiebt.

Diese spezielle Ausgestaltung des Bodens bietet daher auch unabhängig davon Vorteile, ob die Halterungen jeweils in der erfindungsgemäßen Weise mit Verankerungsmodulen gekoppelt werden, die zur Befestigung an der Wand dienen. D. h. die Ausgestaltung des Bodens kann insbesondere auch bei Halterungen eingesetzt werden, welche direkt an der Wand befestigt werden, beispielsweise nur mittels Klebe- bzw. Haftstreifen, die auf eine glatte Rückseite der Rückwand aufgebracht wurden. Die Konstruktion kann daher auch als eigenständige Idee gesehen werden. Besondere Vorteile bestehen aber in Kombination mit Halterungen, die durch Kopplung mit Verankerungsmodulen an der Wand gehalten werden, insbesondere dann, wenn sie verschiebbar mit den Verankerungsmodulen gekoppelt sind. Je nach Ausgestaltung ist so eine Zentrierung und passige Halterung des Endgeräts in verschiedene Richtungen möglich, um das Endgerät besonders sicher zu halten.

Zur konkreten Ausgestaltung, wie die Böden der Halterungen schräg zueinander angeordnet sein und aufeinander zulaufen können, gibt es verschiedene Variationsmöglichkeiten.

Vorzugsweise kann der Boden einen an die Rückwand angrenzenden ersten Bodenabschnitt aufweisen, der schräg im Wesentlichen in einem Winkel von höchstens 60°, besonders bevorzugt höchstens 50°, weiter bevorzugt höchstens 45°, zur Rückwand angeordnet ist.

Besonders bevorzugt kann dabei der Boden einen an die Vorderwand angrenzenden zweiten Bodenabschnitt aufweisen, der schräg im Wesentlichen in einem Winkel von höchstens 60°, besonders bevorzugt höchstens 55°, weiter bevorzugt höchstens 50°, zur Vorderwand angeordnet ist.

Ganz besonders bevorzugt können dabei die beiden Abschnitte V-förmig schräg nach unten, im Wesentlichen in einem Winkel von höchstens 90°, aufeinander zulaufen.

Auch durch eine geschickte Gestaltung der Vorderwände können erhebliche Vorteile erreicht werden.

Vorzugsweise können die Vorderwände der Halterungen jeweils in einem ersten Abschnitt entlang einer Vorderwandlängsrichtung vom Boden weg entlang der Rückwände schräg bis zu einer Knicklinie auf die Rückwände zulaufen.

Dabei können weiterhin die Vorderwände in einem zweiten Abschnitt ab der Knicklinie weiter entlang der "geknickten" Vorderwandlängsrichtung wiederum von den Rückwänden schräg weglaufen.

Unter "schräg" ist zu verstehen, dass die Vorderwände im ersten Abschnitt schräg unter Reduzierung, vorzugsweise Halbierung, des lichten Abstands zu den Rückwänden auf die Rückwände zulaufen, also der Spalt zwischen den Vorderwänden und Rückwänden bis zur Knicklinie immer enger wird. Im daran anschließenden zweiten Abschnitt laufen die Vorderwände dann schräg unter Vergrößerung, vorzugsweise Verdopplung, des neuen, lichten Abstands zu den Rückwänden von den Rückwänden weg, der Spalt wird also wieder größer.

Mit den beiden jeweils auf die gemeinsame Knicklinie dazwischen schräg zulaufenden Abschnitten wird erreicht, dass das Endgerät auf der Vorderseite nur im Wesentlichen entlang der Knicklinie in Kontakt zur Halterung bzw. Vorderwand der Halterung steht und sich damit aufgrund der kleineren Kontaktfläche deutlich leichter mit weniger Reibung und demnach weniger Kraftaufwand in die Halterungen einschieben lässt, ohne dabei an Halt zu verlieren.

Konkret können die Vorderwände im ersten Abschnitt, vorzugsweise in den ersten beiden Dritteln, besonders bevorzugt in den ersten drei Vierteln, entlang der geknickten Vorderwandlängsrichtung vom Boden weg entlang der Rückwände schräg zu den Rückwänden in einem Einfallswinkel bis zu einer Knicklinie auf die Rückwände zulaufen. Im zweiten Abschnitt ab der Knicklinie weiter entlang der Vorderwandlängsrichtung können sie dann folglich, vorzugsweise im übrigen Drittel, besonders bevorzugt im übrigen Viertel, in einem Ausfallswinkel wiederum schräg zu den Rückwänden von den Rückwänden weglaufen. Dies hat den Vorteil, dass die Vorderwände auf Höhe der Oberkante der Halterungen am oberen Ende näher an den Rückwänden angeordnet sind als auf Höhe der Unterkante der Unterseite der Halterungen am unteren Ende. Ein Aufbau, z. B. 2/3 vs. 1/3 oder 3/4 vs. 1/4, bei dem der untere Abschnitt länger ist als der obere Abschnitt, bei dem also die Knicklinie nicht exakt mittig angeordnet ist und demnach die Abschnitte nicht gleich lang sind, sorgt für eine größere Hebelwirkung, welche dabei hilft, die im Verhältnis zu den Halterungen meist deutlich größeren, zu haltenden Tablets stabiler und sicherer in der Halteanordnung halten zu können, da die Druckpunkte auf die Tablet-Oberfläche weiter nach oben verlagert sind.

Vorzugsweise ergeben der Einfallswinkel und der Ausfallswinkel zusammen einen stumpfen Innenwinkel. Besonders bevorzugt kann der Einfallswinkel der Vorderwände zu den Rückwänden gleich dem Ausfallswinkel zwischen diesen sein. Dies sorgt für eine gleichmäßig "geknickte", besonders stabile Vorderwand, die zudem aufgrund ihrer Symmetrie zusätzlich noch optisch ansprechend aussieht.

Vorzugsweise kann die klemmende Knicklinie bzw. Klemmkante schräg zur Vorderwandlängsrichtung verlaufen.

Vorzugsweise können dabei ferner bei einer bestimmungsgemäßen Montage zweier Halterungen an einer Wandfläche zur Halterung eines mobilen Endgeräts die Knicklinien der beiden Halterungen unter Bildung sogenannter Einführschrägen für das mobile Endgerät schräg zur Unterseite aufeinander zu verlaufen.

Mit anderen Worten kann eine klemmende Knicklinie zwischen dem zur Rückwand zulaufenden Abschnitt - bevorzugt im Wesentlichen zwei Drittel - und dem von der Rückwand weglaufenden Abschnitt - bevorzugt das übrige Drittel - der Vorderwand jeweils zur Mitte der Rückwand bzw. zu einem zu haltenden mobilen Endgerät hin relativ zur Unterseite abfallen.

Vorzugsweise können die Oberkanten der Vorderwand und der Rückwand bei einer Frontalsicht von vorne auf die Halterungen ohne Endgerät wieder in einer Flucht abschließen. Dadurch wird nämlich das Einführen eines Endgeräts von oben in die Halterungen zwischen Rückwand und Vorderwand leichter, insbesondere durch das leicht schräg nach vorne von der Endgeräteoberfläche wegstehende Drittel der Vorderwand.

Ferner kann durch den schrägen Knick eine automatische Zentrierung des Endgeräts von oben in die Halterungen erreicht werden. Dabei sorgt eine Schrägstellung der Vorderwände zu den Rückwänden dafür, dass der Spalt zwischen Rückwand und Vorderwand leicht zur Mitte bzw. zur jeweils anderen Halterung geöffnet ist. Mit diesem zur Mitte jeweils zunehmenden Abstand zwischen den Vorder- und Rückwänden nimmt zugleich auch ein Anpressdruck der Vorderwände gegen die Rückwände zur Mitte hin ab. Dieser ist wie erwähnt bedingt durch die schräg nach unten innen abfallenden, klemmenden Knicklinien. Beim Einführen bzw. Einschieben eines Endgeräts reagiert dieses entsprechend und wird automatisch in eine mittige bzw. zentrale Position geführt und liegt dadurch zu gleichen Teilen in beiden Aufnahmen auf.

Eine Ausgestaltung der Vorderwand mit einer "Biegung" zum Endgerät und/oder wie oben beschrieben mit mehr Abschnitten, die unter einem stumpfen Winkel zueinanderstehen, sorgt zudem für mehr Stabilität und Festigkeit der Vorderwand. Insbesondere, wenn z. B. ein besonders dickes Endgerät eingeschoben wird, welches die Vorderwand stark belastet, also aufbiegt, indem es viel Druck auf die Knicklinie in der Vorderwand ausübt, hilft diese Biegung, dass die Konstruktion diesem Druck nachgiebig bzw. elastisch Stand hält und in der Regel nicht bricht. Die Kraft bzw. der Druck wird nämlich aufgrund der nahezu "gebogen" bzw. stumpf geknickt verlaufenden Vorderwände, gleichmäßig auf eine größere Strecke bzw. Fläche der Vorderwände verteilt.

Vorzugsweise können die Vorderwände so dimensioniert sein, dass sie die Rückwände bei einer Frontalansicht von vorne auf die Halterungen ohne Endgerät nur partiell, besonders bevorzugt jedoch mindestens im Wesentlichen zur Hälfte, ganz besonders bevorzugt auf einer hakenseitigen Längshälfte, bedecken. Mit anderen Worten kann die Vorderwand einer Halterung vorteilhafterweise kleiner sein als die Rückwand einer Halterung, um ein besonders großes Sichtfeld auf das Endgerät zu ermöglichen, indem die Vorderwände nur einen kleinen Randbereich des Endgeräts verdecken.

Wie oben bereits erwähnt, kann es für die weitere Ausgestaltung des Verfahrens zur Montage einer Halteanordnung für ein mobiles Endgerät an einer Wandfläche einer Wand weitere, bevorzugte Montageschritte geben, wobei dies vom konkreten Aufbau der Halteanordnung abhängen kann.

Bei einer bevorzugten Ausgestaltung der Erfindung kann das Koppeln einer Halterung mit einem Verankerungsmodul bei der Montage - wenn die Halterungen entsprechend wie oben beschrieben ausgebildet sind - vorzugsweise jeweils durch ein Aufschieben der Halterung, hier beispielsweise im bestimmungsgemäß montierten Zustand in Richtung der Schwerkraft, also von oben auf das Verankerungsmodul in einer Längsrichtung der Halterung erfolgen. Dadurch bleiben die Halterungen praktischerweise aufgrund ihres eigenen Gewichts gewichtskraftbedingt mit den Verankerungsmodulen gekoppelt, sofern sie nicht durch einen Nutzer wieder aus einer gekoppelten Stellung in eine entkoppelte Stellung gegeneinander verschoben werden.

Alternativ kann das Koppeln einer Halterung mit einem Verankerungsmodul vorzugsweise jeweils durch ein seitliches Aufschieben der Halterung auf das Verankerungsmodul in einer Querrichtung der Halterung erfolgen.

Besonders bevorzugt kann das Koppeln zudem von einer jeweils anderen, vom Verankerungsmodul wegweisenden Kante des Verankerungsmoduls aus erfolgen.

Vorzugsweise können die Halterungen in einem Schritt auf den Verankerungsmodulen in einer Längsrichtung verschoben werden.

Alternativ oder zusätzlich kann das Verschieben der Halterungen in einer Querrichtung der Halterungen erfolgen.

Vorzugsweise können sich die Aufnahmen der Halterungen vorzugsweise bis zu einer ersten Abstandsstellung bzw. Raststellung annähern. Unter einer ersten Abstandsstellung bzw. Raststellung ist eine Stellung gemeint, in welcher einer der Raststege in einer der Rastaussparungen einrastet.

In einem weiteren Schritt kann ein mobiles Endgerät in die Aufnahmen der Halterungen eingesteckt bzw. eingeschoben werden.

Vorzugsweise können die Halterungen schließlich weiter auf den Verankerungsmodulen in der Querrichtung der Halterungen zur Anpassung des lichten Abstands zwischen zwei seitlichen Außenanschlägen der Aufnahmen zwischen Vorderwand und Rückwand an ein Breitenmaß des mobilen Endgeräts verschoben werden.

Besonders bevorzugt können die Halterungen so verschoben werden, dass eine passige bzw. akkurate Halterung oder Klemmung des mobilen Endgeräts in der Halteanordnung vorliegt.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen:
Figur 1 eine schräge, perspektivische Vorderansicht eines bevorzugten Ausführungsbeispiels einer erfindungsgemäßen Halteanordnung mit eingeschobenen mobilen Endgerät,
Figur 2 eine vergrößerte, perspektivische Vorderansicht des Ausführungsbeispiels aus Figur 1 ohne eingeschobenes mobiles Endgerät,
Figur 3 eine vergrößerte, perspektivische Rückansicht des Ausführungsbeispiels aus Figur 1 und 2 einmal mit einer Halterung mit gekoppeltem Verankerungsmodul und einmal mit einer Halterung ohne gekoppeltes Verankerungsmodul,
Figur 4 eine perspektivische Seitenansicht einer Halterung sowie eines zugehörigen Verankerungsmoduls gemäß Figur 3, in gesprengter Darstellung,
Figur 5 eine schräge, perspektivische Vorderansicht eines weiteren Ausführungsbeispiels einer erfindungsgemäßen Halteanordnung mit eingeschobenen mobilen Endgerät,
Figur 6 eine Seitenansicht einer der beiden abgewandelten Halterungen des Ausführungsbeispiels aus Figur 5, ohne gekoppeltes Verankerungsmodul,
Figur 7 eine vergrößerte Rückansicht eines Ausschnitts des Ausführungsbeispiels der Halterung gemäß Figur 6,
Figur 8 eine isolierte, perspektivische Vorderansicht eines Verankerungsmoduls für die Halterungen des Ausführungsbeispiels der Halteanordnung gemäß Figur 5,
Figur 9 eine isolierte, perspektivische Rückansicht des Verankerungsmoduls gemäß Figur 8.

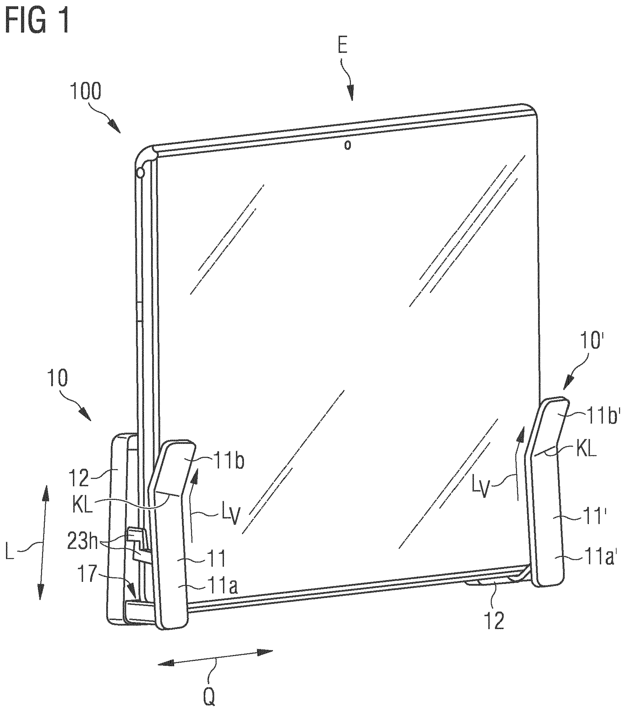

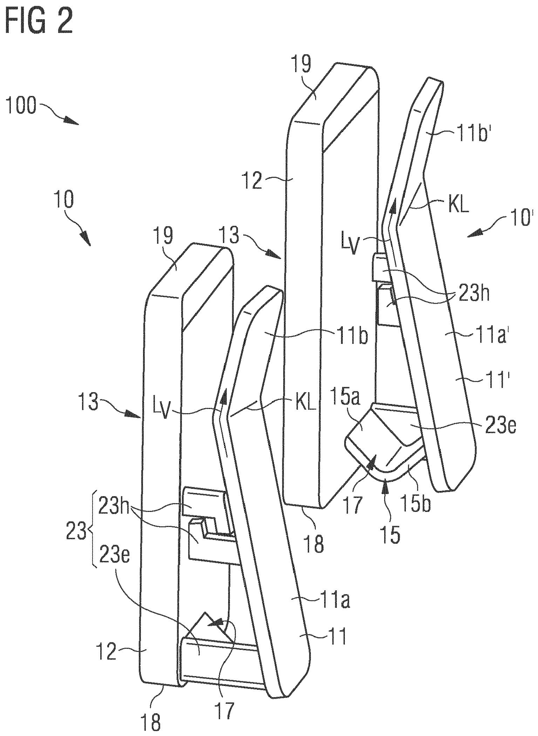

Anhand der Figuren 1 bis 4 wird nun zunächst ein bevorzugtes Ausführungsbeispiel einer erfindungsgemäßen Halteanordnung 100 mit zwei einzelnen, spiegelsymmetrisch zueinander angeordneten Halterungen 10, 10' zur Halterung eines mobilen Endgeräts E, hier bevorzugt ein Tablet, an einer Wandfläche beschrieben. Sämtliche gespiegelte Komponenten der beiden Halterungen 10, 10' der Halteanordnung 100, wie im Übrigen auch der Halterungen 210, 210' der Halteanordnung 200, welche sich von ihrer jeweiligen spiegelbildlichen Komponente durch eine andere Orientierung oder Form unterscheiden, sind mit einem entsprechenden Bezugszeichen mit Strich versehen.

Die, bei einem Blick von vorne auf das mobile Endgerät E im Umriss im Wesentlichen rechteckigen Halterungen 10, 10' der Halteanordnung 100 sind in einer Querrichtung Q der Halterungen 10, 10' (welche Querrichtung Q nach der Orientierung der querverlaufenden, kürzeren Seitenlängen der Halterungen 10, 10' benannt ist) voneinander beabstandet. Dabei sind sie an den unteren Eckbereichen des mobilen Endgeräts E angeordnet und erstrecken sich von dort in einer Längsrichtung L senkrecht zur Querrichtung Q (welche Längsrichtung L entsprechend dem Verlauf der längeren Seitenlängen der Halterungen 10, 10' benannt ist) entlang der Kanten des mobilen Endgeräts E nach oben.

Eine Längs- bzw. Querrichtung des mobilen Endgeräts E kann, muss aber nicht - wie hier z. B. gezeigt - zwangsweise mit der Längsrichtung L und Querrichtung Q der Halterungen 10, 10' der Halteanordnung 100 übereinstimmen. Dies kann ein Benutzer bei der Montage der Halteanordnung 100 an einer Wandfläche nach seiner jeweiligen Vorliebe selbst entscheiden, abhängig davon, ob das Tablet im Hochformat oder im Querformat eingesetzt werden soll.

Jede der Halterungen 10, 10' umfasst jeweils eine rückseitig am Endgerät E anliegende Rückwand 12, eine sich im Wesentlichen entlang der Rückwand 12 erstreckende Vorderwand 11, 11', welche zumindest partiell mit der Gerätevorderseite in jeweils einem Rand- bzw. Rahmenbereich des Endgeräts E in Druckkontakt steht und einen sich zwischen Vorderwand 11, 11' und Rückwand 12 erstreckenden Boden 15, auf welchem das Endgerät E mit einer Unterkante im Bereich seiner beiden unteren Ecken abschnittsweise aufliegt.

Auf diese Weise bilden die Vorderwände 11, 11', die Rückwände 12 und der Boden 15 der ersten Halterung 10 und der zweiten Halterung 10' jeweils eine Aufnahme 17 zum Einführen, Einschieben bzw. Aufnehmen des mobilen Endgeräts E. Damit wird das Endgerät E eigentlich bereits ausreichend sicher rückseitig, vorderseitig sowie unterseitig eingerahmt gehalten, so dass es bei einem vorgesehenen Gebrauch weder von der Halteanordnung 100 herunterfallen bzw. abrutschen noch in den Halterungen 10, 10' der Halteanordnung 100 z. B. beim Eintippen eines Suchbegriffs oder dergleichen wackeln kann. Eine genauere Beschreibung der Aufnahme 17 folgt weiter unten.

Um unterschiedlich dicke bzw. starke Endgeräte E zwischen den Vorderwänden 11, 11' und den Rückwänden 12 der Halterungen 10, 10' aufnehmen bzw. einsetzen zu können, sind zumindest die Vorderwände 11, 11' selbst aus einem Material ausgebildet und zudem so an den Böden 15 geankert, dass sie sich in gewissem Umfang von den Rückwänden 12 elastisch wegbiegen lassen.

Damit die Böden 15 dabei auf Dauer besonders stabil sind, weisen die äußeren Eckbereiche der Halterungen 10, 10' zwischen den Vorderwänden 11, 11' und den Rückwänden 12 an den voneinander abgewandten Außenkanten Außenanschläge 23 mit vertikal stehenden, stegförmigen Eckkantenversteifungen 23e auf. Die Außenanschläge 23 sorgen zudem für einen seitlichen Halt des mobilen Endgeräts E im Bereich der unteren Ecken, so dass das mobile Endgerät E - sollte es einmal seitlich mit Druck beaufschlagt werden, z. B. beim Einstecken eines Audio-, Lade- oder anderen Kabels in eine entsprechende seitliche Buchse des Endgeräts E - auch in einer horizontalen Querrichtung Q (senkrecht zur vertikalen Längsrichtung L) nicht aus den Halterungen 10, 10' der Halteanordnung 100 herausrutschen kann.

Um die Vorderwände 11, 11', insbesondere bei Verwendung eines besonders dicken Endgeräts, noch mehr zu stabilisieren und gegen übermäßige Überlastung zu schützen, so dass also die Vorderwände 11, 11' vor allem auf einer oberen Hälfte nicht über einen elastischen Bereich bzw. eine Überlastungsgrenze hinaus von den Rückwänden 12 weg- bzw. aufgebogen werden können, sind die Vorderwände 11, 11' mit den Rückwänden 12 über Hakenanordnungen 23h, die ein gewisses Bewegungsspiel zulassen, in etwa auf halber Höhe der Wände indirekt zueinander abgesichert. Bei den Hakenanordnungen 23h handelt es sich dabei um je zwei einzelne, nicht durchgängige, voneinander beabstandete Haken 23h bzw. Hakenanschläge.

Diese Haken 23h greifen auf Zug ineinander und können damit effektiv verhindern, dass eine Überlastungsgrenze überschritten wird, ab welcher die Vorderwände 11, 11' sonst eventuell an ihrem Verankerungspunkt an den Böden 15 abreißen bzw. abbrechen könnten bzw. sich zumindest die Wahrscheinlichkeit rapide erhöht, dass sie abbrechen könnten, da die maximale Biegsamkeit des Materials dann erreicht werden würde. Auf diese Weise wird sichergestellt, dass die Halterungen 10, 10' auch nach häufigem Aufbiegen intakt bleiben.

An dieser Stelle sei darauf hingewiesen, dass es zwar theoretisch möglich ist, ein biegsameres bzw. elastischeres Material zu verwenden, um bei gleichen Abmessungen der Halteanordnung 100 auch Endgeräte E mit noch dickeren Abmessungen verwenden zu können, d. h. zwischen den Vorderwänden 11, 11' und den Rückwänden 12, 12' einführen zu können. Jedoch geht der allgemeine Trend seit Jahren bereits in eine Richtung hin zu immer dünneren bzw. flacherem mobilen Endgeräten E, so dass es an dieser Stelle wichtiger ist, dass derart dünne bzw. flache Endgeräte E, vorzugsweise Endgeräte mit einer Dicke von mindestens 4 mm und höchstens 15 mm, besonders bevorzugt mindestens 5 mm und höchstens 12 mm, noch "klapper- bzw. schlackerfrei" zwischen den Vorderwänden 11, 11' und den Rückwänden 12 spielfrei, d. h., ohne bei einer Benutzung zu wackeln, sicher und bestimmt gehalten werden. Eine Halteanordnung aus einem noch biegsameren Material würde sich entsprechend weiter aufbiegen lassen, wenn z. B. einmal ein besonders dickes Endgerät verwendet wird. Erfahrungsgemäß kann jedoch eine Halteanordnung mit Vorderwänden aus einem solchen Material keinen ausreichenden Druck ausüben, um auch sehr dünne bzw. flache Endgeräte E, insbesondere nachdem es z. B. mehrmals und/oder für eine gewisse Zeit mit einem dickeren Endgerät ausgeleiert wurde, ausreichend festzuhalten.

An dieser Stelle sei erwähnt, dass für die Halterungen 10, 10' und die Verankerungsmodule 30 (Erläuterung weiter unten) der Halteanordnung 100 sowie auch für die Halterungen 210, 210' und Verankerungsmodule 230 (Erläuterung ebenfalls weiter unten) der Halteanordnung 200 vorzugsweise ein Material verwendet wird, welches eine Herstellung in einem Spritzgussverfahren erlaubt. Entsprechend können gewisse Formen und Abmessungen ebenfalls so gewählt sein, dass sie sich zur Herstellung mittels Spritzguss eignen.

Zugleich bilden die besagten Hakenanordnungen 23h weitere seitliche Außenanschläge 23, welche nun das Endgerät E auch weiter oben zusätzlich seitlich einrahmen. Demnach ist es denkbar, auf die zuvor erwähnten weiter unten befindlichen Eckkantenversteifungen 23e gegebenenfalls zu verzichten. Insgesamt stellen die Hakenanordnungen 23h technisch eine besonders herausragende Lösung dar, welche die Halteanordnung 100 aus den besagten Gründen besonders vorteilhaft weiterbildet.

Bei einem Blick von vorne auf die Halterungen 10, 10' der Halteanordnung 100 fällt auf, dass die Vorderwände 11, 11' auf ihrer gesamten Länge jeweils nur in etwa die Hälfte der dahinterliegenden, im Wesentlichen parallel verlaufenden Rückwände 12 bedecken. Damit wird erreicht, dass ein mobiles Endgerät E auf seiner Rückseite ausreichend breit, flächig und damit sicher geführt ist, jedoch auf der wesentlichen Vorderseite, welche den Bildschirm bzw. Display aufweist, nur im Wesentlichen entlang der Randbereiche von den Vorderwänden 11, 11' verdeckt wird, so dass in der Regel nahezu der gesamte Bildschirm auf der Vorderseite zur Betrachtung und Bedienung des Endgeräts E frei sichtbar bleibt, da die Vorderwände 11, 11' lediglich Abschnitte des den Bildschirm umseitig umrahmenden Rahmens bedecken.

Damit das mobile Endgerät E beim Einschieben bzw. Einführen in die Halterungen 10, 10' der Halteanordnung 100 direkt eine vorgesehene Neigung bzw. Stellung einnimmt, hier z. B. exakt vertikal, wird der Boden 15 durch einen an die Rückwand 12 angrenzenden ersten Bodenabschnitt 15a, der hier im Wesentlichen schräg in einem Innenwinkel α von 45° zur Rückwand 12 angeordnet ist, und einen an die Vorderwand 11, 11' angrenzenden zweiten Bodenabschnitt 15b gebildet, der hier im Wesentlichen schräg in einem Innenwinkel β von 50°, zur Vorderwand 11, 11' angeordnet ist. Die beiden Abschnitte 15a, 15b laufen dabei V-förmig mit einem Öffnungswinkel γ bzw. Winkel γ von 90° aufeinander zu, so dass sie eine Art "Kuhle" bzw. "Mulde" auf der Oberseite des Bodens 15 bilden, in welche eine Kante des mobilen Endgeräts E von den beiden aufeinander zulaufenden Abschnitten 15a, 15b entsprechend geführt in eine optimale, z. B. aufrechte Position von selbst hineinrutscht.

Alternativ wäre aber auch eine leicht winklige Stellung denkbar, z. B., indem einer der Abschnitte senkrechter steht als der andere, womit das mobile Endgerät von selbst in eine winkligere Stellung hineinrutschen würde. Dies wäre von Vorteil, wenn das Endgerät an einer Wandfläche z. B. Platz bedingt etc. leicht oberhalb oder unterhalb einer typischen Kopfhöhe angebracht ist.

Typischerweise handelt es sich bei der besagten Kante des Endgeräts E bei einem im Format rechteckigen mobilen Endgerät E um eine längere Längskante, z. B. wenn das Endgerät E nämlich im Querformat mit einer der längeren Längskanten nach unten zeigend benutzt wird. Alternativ kann es aber auch um eine der kürzeren Querkanten handeln, wenn das Endgerät E im Hochformat, also mit einer der kürzeren Querkanten nach unten zeigend in der Halteanordnung 100 angebracht wurde.

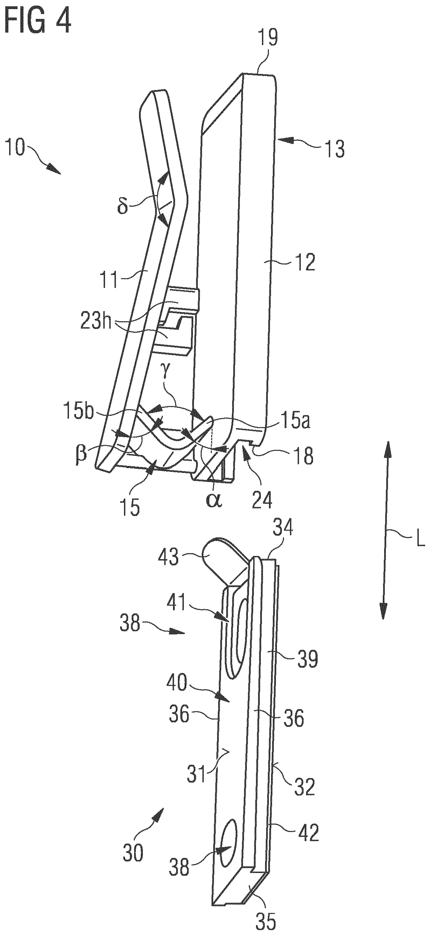

Im Hinblick auf die zur Vorderseite hin planen Rückwände 12 der Halterungen 10, 10', welche im bestimmungsgemäß an einer vertikalen Wandfläche angebrachten Zustand mit den Verankerungsmodulen 30 gekoppelt vertikal stehen, verlaufen die Vorderwände 11, 11' entlang ihrer Vorderwandlängsrichtung Lv leicht schräg (siehe insbesondere Figur 4). Konkret verlaufen die Vorderwände 11, 11', an welche wie erwähnt in einem ersten unteren Abschnitt 11a jeweils der Boden 15 mit dem schrägen Bodenabschnitt 15b angrenzt, vom Boden 15 ausgehend entlang ihrer Vorderwandlängsrichtung Lv zunächst bis zu einer Knicklinie KL (bei in etwa zwei Dritteln der Höhe bzw. Länge der Vorderwände 11, 11') leicht schräg nach oben auf die Rückwände 12 zu. Ab der Knicklinie KL verlaufen sie dann jeweils in einem zweiten oberen Abschnitt 11b (im übrigen Drittel) weiter entlang der "geknickten" Vorderwandlängsrichtung Lv wiederum leicht schräg von den Rückwänden 12 weg, d. h. schräg nach oben in den Raum hinein. Mit anderen Worten stehen sie von der Wandfläche unter Bildung einer geöffneten Einschuböffnung zum leichteren Einführen eines mobilen Endgeräts E ab. Die beiden Abschnitte 11a, 11b der Vorderwände 11, 11' sind dabei jeweils in einem stumpfen Winkel δ zueinander angeordnet, wie unter anderem in Figur 4 zu sehen ist.

Die besagten Knicklinien KL zwischen den zwei jeweils schräg aufeinander zulaufenden Abschnitten 11a, 11b der Vorderwände 11, 11' fallen zur jeweils anderen Halterung 10', 10 der Halteanordnung 100, also zur Mitte des dazwischenliegenden Endgeräts E, ab und bilden damit zwei sogenannte "Einführschrägen" zum leichteren Einführen eines mobilen Endgeräts E in die Halterungen 10, 10'. Dieser schräge Verlauf sorgt nämlich dafür, dass die Oberkanten der Vorderwände 11, 11' von oben gesehen ebenfalls nicht mehr ganz parallel zu den dahinter verlaufenden Oberkanten 19 der Rückwände 12 verlaufen, sondern in Richtung der jeweils anderen Halterung 10', 10' zunehmend weiter weg von der jeweiligen Rückwand 12 abstehen, so dass die Öffnung zum Einführen eines mobilen Endgeräts E zur jeweils anderen Halterung 10', 10 sogar noch etwas größer wird.

Ein Einschieben des mobilen Endgeräts E von oben zwischen den Rückwänden 12 und den Vorderwänden 11, 11', insbesondere ein Einfädeln am Anfang, wird so erleichtert. Gleichzeitig sorgen die Einführschrägen der Vorderwände 11, 11' für ein automatisches Zentrieren des mobilen Endgeräts E zu gleichen Teilen in beiden Aufnahmen 17 der Halterungen 10, 10' der Halteanordnung 100, da der Druck in Querrichtung Q entlang der Vorderwände 11, 11'jeweils zur anderen Halterung 10', 10 leicht abnimmt. Das mobile Endgerät E "flutscht" somit mittig zentriert in die beiden Halterungen 10, 10' der Halteanordnung 100 hinein, ohne sich dabei seitlich, z. B. an den Hakenanordnungen 23h oder Eckkantenversteifungen 23e weiter unten zu verkeilen. Für einen Nutzer entfällt damit direkt auch ein nerviges Zentrieren und Ausrichten des mobilen Endgeräts E nach dem Einschieben in die Halteanordnung 100.

Zur besonders leichten Montage der Halterungen 10, 10' an einer Wandfläche sind rückseitig in den Rückwänden 12 der Halterungen 10, 10'jeweils Verankerungsmodulaufnahmen 24 zur lösbaren Schnellkopplung von Verankerungsmodulen 30 integriert.

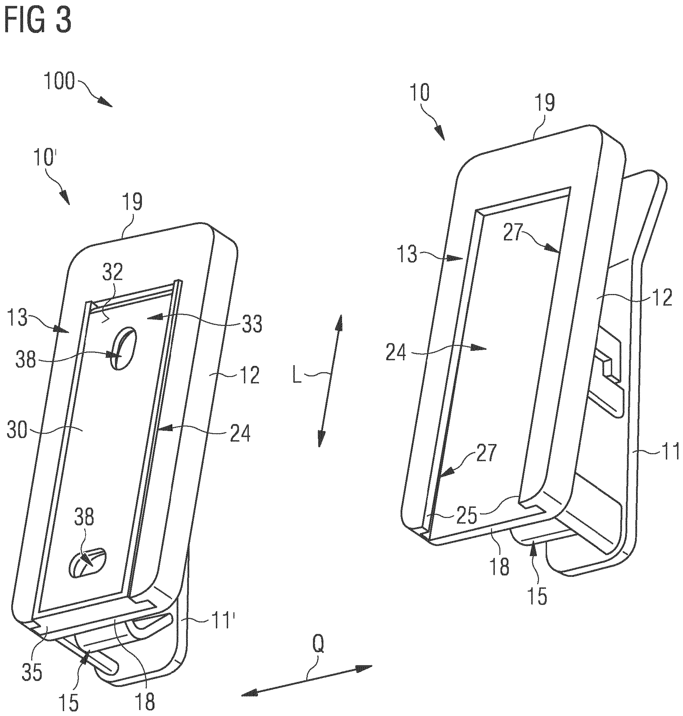

Beispielhaft ist in Figur 3 die hier rechte Verankerungsmodulaufnahme 24 der Halterung 10 ohne gekoppeltes Verankerungsmodul gezeigt und die hier linke Verankerungsmodulaufnahme 24 der Halterung 10' mit gekoppeltem Verankerungsmodul 30. Im bestimmungsgemäß an einer Wandfläche angebrachten Zustand der Halteanordnung 100 sind dann allerdings beide Verankerungsmodulaufnahmen 24 vollständig mit dem jeweiligen Verankerungsmodul 30 besetzt. Bei den Verankerungsmodulaufnahmen 24 handelt es sich um rechteckige Aussparungen, die flächenmäßig kleiner sind als die Rückwände 12, so dass entlang zumindest dreier Kanten der Rückwände 12, nämlich zweier Längskanten und einer Oberkante 19, ein Rand verbleibt.

Dieser Rand rahmt die Aussparungen bzw. Verankerungsmodulaufnahmen 24 jeweils auf drei Seiten ein und überragt diese mit Raststegen 25 mit einer umlaufenden Hinterschneidung 27 sogar etwas. Zur übrigen Unterkante 18 der Rückwände 12 hin sind die Verankerungsmodulaufnahmen 24 jeweils offen gestaltet, d. h. hier erstrecken sich die Aussparungen jeweils bis ganz zur Kante. Dadurch können die Verankerungsmodule 30 von unten in den Zwischenraum, zwischen den über die Verankerungsmodulaufnahmen 24 ragenden Raststegen 25 und den Rückwänden 12 sozusagen vor bzw. in die Hinterschneidungen 27 bzw. Nuten 27 eingeschoben werden kann (siehe Figur 4). Tatsächlich werden bei einer Montage die Halterungen 10, 10' mit den Verankerungsmodulaufnahmen 24 von oben auf die Verankerungsmodule 30 aufgeschoben, nachdem diese an einer Wandfläche montiert wurden.

Hierfür weisen die Verankerungsmodule 30 eine korrespondierende Außenform bzw. Kontur auf, welche im einfachsten Fall im gekoppelten Zustand der Verankerungsmodule 30 mit bzw. in den Verankerungsmodulaufnahmen 24 die Verankerungsmodulaufnahmen 24 im Wesentlichen vollständig bis auf ein wenig Spiel auffüllt.

Wie insbesondere in Figur 3 und 4 zu sehen ist, sind in den Verankerungsmodulen 30 jeweils zwei Öffnungen 38 bzw. Durchgangsbohrungen 38 eingebracht, welche sich jeweils von einer Halterungskupplung 40 auf der Vorderseite 31 zu einer Wandhalterungsfläche 33 auf der Rückseite 32 der Verankerungsmodule 30 durch die Verankerungsmodule 30 hindurch erstrecken. Die Durchgangsbohrungen 38 dienen der Montage der Verankerungsmodule 30 mithilfe von Bohrlöchern, Dübeln und Schrauben an einer Wandfläche und sind hier einmal als vertikal, sowie einmal als horizontal verlaufende Langlochbohrung 38 ausgebildet, um die Verankerungsmodule 30 nach dem Einbringen der Bohrlöcher in der Wand noch leicht in der Querrichtung Q sowie in der Längsrichtung L, sprich links/rechts bzw. oben/unten relativ zu den Bohrlöchern verschoben anordnen zu können. Bei den Verankerungsmodulen 30 können demnach die beiden gleich orientierten Langlochbohrungen 38 jeweils beide oben bzw. beide unten oder alternativ einander kreuzweise diagonal gegenüberliegen. Damit lassen sich die Verankerungsmodule 30 sehr leicht nachträglich nach dem Bohren der Bohrlöcher in eine Wandfläche noch "im Wasser" bzw. horizontal ausrichten - zumindest sofern die Bohrlöcher zuvor einigermaßen präzise gebohrt worden sind.

Wie lediglich in Figur 4 zu sehen ist, ist um je eine der Langlochbohrungen 38 der Verankerungsmodule 30 ein Umgebungsbereich auf den Vorderseiten 31 der Verankerungsmodule 30 von einer Oberkante 34 der Verankerungsmodule 30 bis um die jeweilige Langlochbohrung 38 herum in etwa daumennagelgroß in Form einer zungenförmigen Flächenaussparung 41 versenkt bzw. ausgespart. In diesen zungen- bzw. U-förmig geschaffenen Flächenaussparungen 41 lässt sich jeweils eine im Wesentlichen formgleiche, relativ dazu etwas kleinere Abziehlasche 43 eines auf den Rückseiten 32 der Verankerungsmodule 30 flächig anbringbaren Haftstreifens 42 (siehe Figur 4) unterbringen. Diese besonders leicht entfernbaren Haftstreifen 42 mit Abziehlasche 43 können als alternatives oder zusätzliches Befestigungsmittel der Verankerungsmodule 30 an einer Wandfläche dienen, wobei sich ihre Abziehlaschen 43 bis zum Gebrauch, d. h. wenn der Haftstreifen 42 bzw. das mit dem Haftstreifen 42 befestigte Verankerungsmodul 30 wieder von der Wandfläche gelöst werden soll, in die Flächenaussparung 41 zur Verstauung umgeklappt werden können.

Solche Haftstreifen 42 können als zusätzliche Befestigungsmittel für eine Vormontage der Verankerungsmodule 30 für das Bohren der Bohrlöcher zum Halten derselben oder als Befestigungsmittel für eine etwas weniger feste, dafür rückstandsfrei lösbare Montage der Verankerungsmodule 30 an einer Wandfläche ohne Verschraubung mit der Wandfläche verwendet werden.

Wie in Figur 4 ebenfalls gezeigt, handelt es sich bei der Halterungskupplung 40 auf der Vorderseite 31 des dargestellten Verankerungsmoduls 30 bis auf die Durchgangsbohrungen 38 und die Flächenaussparungen 41 um eine ebene Fläche. Die Kopplung bzw. Verbindung des Verankerungsmoduls 30 mit der Halterungskupplung 40 in einer Verankerungsmodulaufnahme 24 der Halterung 10 erfolgt mittels einer formschlüssigen Nut-Feder-Verbindung 27, 36. Dazu umfasst die Halterungskupplung 40 des Verankerungsmoduls 30 jeweils seitlich zwei feder- bzw. stegförmig an den Längskanten 39 vorstehende Federelemente 36, welche hier über die halbe Dicke der Verankerungsmodule 30 von der Vorderseite 31 zur Rückseite 32 seitlich vorstehen. Relativ zu diesen Federelementen 36, welche die Fläche der Halterungskupplung 40 längsseitig vergrößern, stehen die eigentlichen Längskanten 39 auf einer rückseitigen Hälfte etwas zurück. In diesen zurückstehenden Teil der Längskanten 39 hinter den Federelementen 36 greifen die Raststege 25 bei einer Kopplung der Halterungen 10, 10' mit den Verankerungsmodulen 30 ein, wobei dabei die vorstehenden Federelemente 36 in den Hinterschneidungen 27 bzw. Nuten 27 innerhalb der Raststege 25 passend geführt sind.

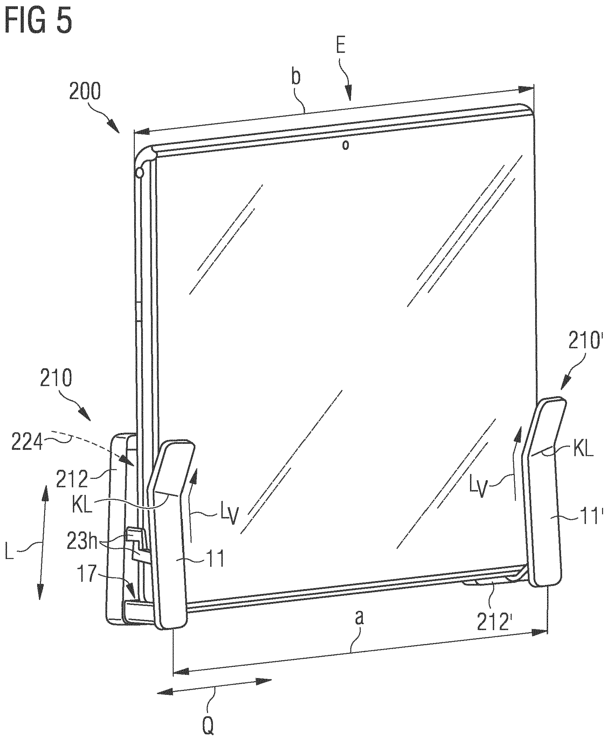

Anhand der Figuren 5 bis 9 wird nun wie erwähnt ein weiteres Ausführungsbeispiel einer erfindungsgemäßen Halteanordnung 200 beschrieben, welches weitere bevorzugte Ausgestaltungsformen und Weiterbildungen der Erfindung enthält, welche sofern gewünscht nahezu beliebig mit dem zuvor beschriebenen Ausführungsbeispiel kombinierbar sind.

Da sich die beiden Ausführungsbeispiele nur teilweise unterscheiden, insbesondere in der Form der Rückwände sowie der Verankerungsmodule, wird im Folgenden nur noch auf diese Unterschiede bzw. Abwandlungen eingegangen.

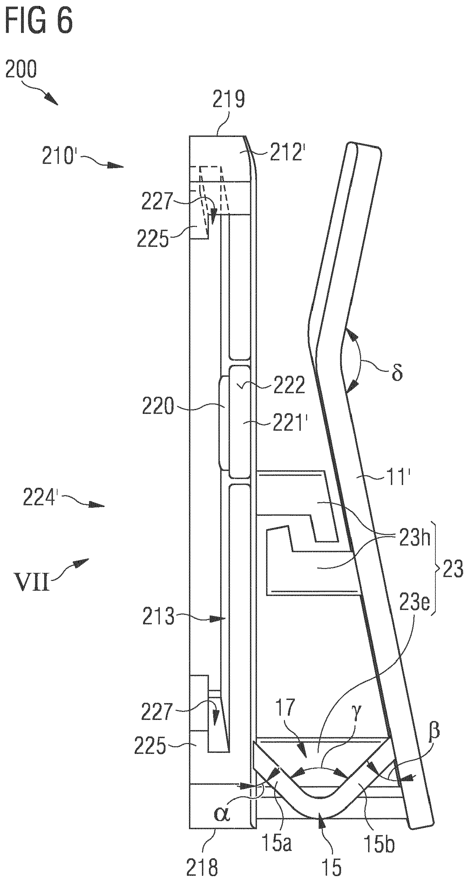

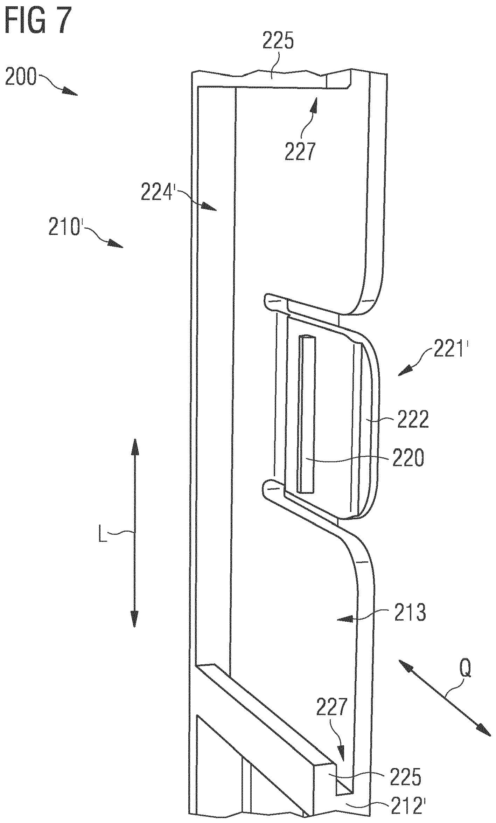

Wie in Figur 5 und 6 zu erkennen ist, sind in die Rückwände 212, 212' der Halterungen 210, 210' u-förmige Schlitzaussparungen eingearbeitet, so dass in etwa auf halber Höhe der Rückwände 212, 212' vorderseitig in den Rückwänden 212, 212' quer zur jeweils anderen Rückwand 212', 212 verlaufende Zungen 221' darin verbleiben. Die Zungen 221, 221' (wovon eine beispielhaft in Figur 6 von der Seite und in Figur 7 perspektivisch dargestellt ist) liegen mit einer Vorderseite an einer Rückseite eines zu haltenden Endgeräts (nicht dargestellt) an, womit die Zungen, wie in Figur 5 dargestellt, bei Verwendung der Halteanordnung 200 mit einem Endgerät E vollständig dahinter verdeckt sind. Auf einer Rückseite weisen die Zungen 221' in Richtung Verankerungsmodulaufnahme 224, 224' abstehende, vertikal verlaufende Raststege 220 auf. Diese sind in etwa mittig zwischen einer Zungenspitze 222 und einer Zungenwurzel, an welcher die Zunge 221' aus der Rückwand 212, 212' hervorgeht, angeordnet.

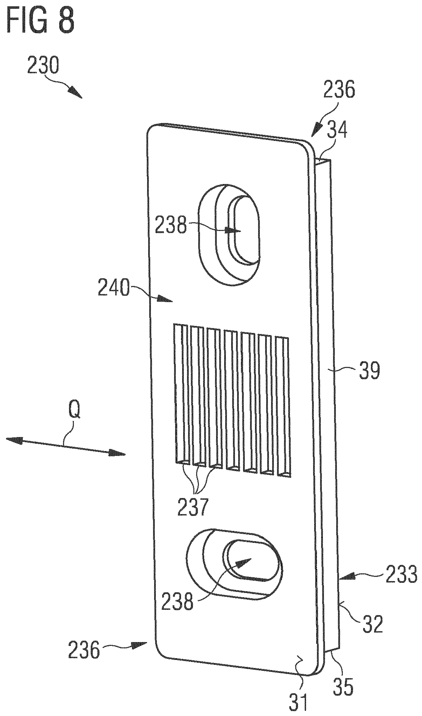

Korrespondierend zu den Raststegen 220, weisen die Verankerungsmodule 230 wie in Figur 8 zu sehen jeweils in einer Halterungskupplung 240 auf einer Vorderseite 31 der Verankerungsmodule 230 zwischen den beiden Langlochbohrungen 238 mehrere, vertikal verlaufende, vorzugsweise regelmäßig, voneinander beabstandete Rastaussparungen 237 bzw. Sackschlitze auf. In jeweils eine dieser Rastaussparungen 237 greift bzw. rastet jeweils ein Raststeg 220 der Zungen 221'ein. Dabei kann von einem Benutzer je nach Bedarf zur relativen Einstellung der beiden Halterungen 210, 210' zueinander jeweils die jeweilige Zunge 221, 221' (hier ist nur die Zunge 221' dargestellt) einer Halterung 210, 210' in eine der Rastaussparungen 237 der Verankerungsmodule 30 eingerastet bzw. eingeklickt werden und damit der relative Abstand zwischen den beiden Halterungen 210, 210' stufenweise zur Feinabstimmung an eine Breite b eines mobilen Endgeräts E, insbesondere auch nach der Montage der Verankerungsmodule 230 an einer Wandfläche angepasst bzw. eingestellt werden. Damit können z. B. unterschiedlich breite Endgeräte unterschiedlicher Hersteller oder auch typische Bildschirmformate, z. B. 7", 8", 9", 10", 11", 12", 13", 14", 15" (Zoll) und Ähnliche bedient werden, so dass z. B. bei einem bestimmten Bohrlochabstand der Bohrlöcher für ein beispielsweise 10"-Tablet bzw. Endgerät mittels der in einer Querrichtung Q zueinander in den Verankerungsmodulen 230 einstellbar verschiebbaren Halterungen 210, 210' je nach vorgenommener Positionseinstellung auch Tablets mit +-2", also in diesem Beispiel Tablets mit den Abmessungen 8", 9", 11" und 12" ebenfalls sicher verwendet werden können, ohne dass hierfür die Bohrlöcher neu gesetzt werden müssen.

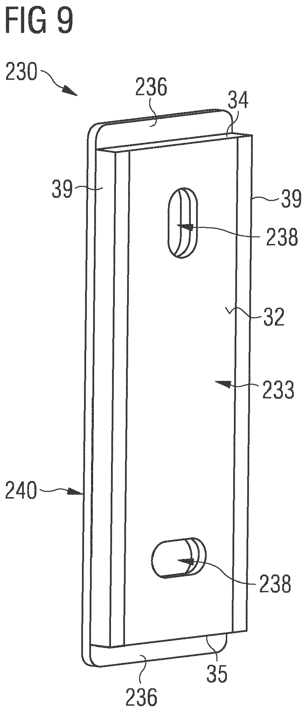

Weiterhin umfassen die Verankerungsmodule 230 gemäß Figur 8 und 9 (wie auch die Verankerungsmodule 30) am Rande der Vorderseite 31 als Teil der Halterungskupplung 240 wiederum Federelemente 36. Bei den Verankerungsmodulen 230 sind die Federelemente 36 diesmal allerdings an einer Oberkante 34 und einer Unterkante 35 der Halterungskupplung 240 ausgebildet, und (ohne Beschränkung der Allgemeinheit) nicht entlang der Längskanten 39. Die Federelemente 36 stehen von der Oberkante 34 und der Unterkante 35 der Wandhalterungsfläche 233 auf der Rückseite 32 (siehe Figur 8) parallel zur Rückseite 32 ab und greifen bei der Kopplung der Verankerungsmodule 230 mit den Halterungen 210 210' jeweils in die Hinterschneidungen 227 bzw. Nuten 227 der oberen und unteren Führungsstege 225 ein, so dass sich die Verankerungsmodule 230 damit in Querrichtung Q geführt relativ zu den Halterungen 210, 210' verschieben lassen.

Die Federelemente 236 an der Oberkante 34 und an der Unterkante 35 des weiteren Ausführungsbeispiels der Verankerungsmodule 230 erfüllen demnach dieselbe Funktion wie die Federelemente 36 an den Längskanten 39 des bevorzugten Ausführungsbeispiels der Verankerungsmodule 30. Sie dienen der verschiebbaren, formschlüssigen Kopplung der Halterungen 10, 10', 210, 210' an den Verankerungsmodulen 30, 230, jedoch einmal einer relativen Verschiebbarkeit in Querrichtung Q und einmal einer Verschiebbarkeit in Längsrichtung L.

Es wird abschließend noch einmal darauf hingewiesen, dass es sich bei den vorhergehend detailliert beschriebenen Vorrichtungen lediglich um Ausführungsbeispiele handelt, welche vom Fachmann in verschiedenster Weise modifiziert werden können, ohne den Bereich der Erfindung zu verlassen. Die Halterungen können dabei beispielsweise im Verhältnis 1 zu 5, vorzugsweise zumindest im Verhältnis 1 zu 4, besonders bevorzugt zumindest im Verhältnis 1 zu 3, ganz besonders bevorzugt zumindest im Verhältnis 1 zu 2, kleiner sein als ein zu haltendes Tablet. Weiterhin schließt die Verwendung der unbestimmten Artikel "ein" bzw. "eine" nicht aus, dass die betreffenden Merkmale auch mehrfach vorhanden sein können.

Ebenso schließen die Begriffe "Einheit" und "Modul" nicht aus, dass diese auch aus mehreren, gegebenenfalls auch räumlich getrennten, Untereinheiten bestehen.

### Bezugszeichenliste

10, 10' Halterungen
11, 11' Vorderwand
12 Rückwand
13 Verankerungsmodulhaltefläche
15 Boden
15a erster Bodenabschnitt
15b zweiter Bodenabschnitt
17 Aufnahme
18 Unterkante der Rückwand
19 Oberkante der Rückwand
23 Außenanschlag
23e Eckkantenversteifung
23h Hakenanordnung
24 Verankerungsmodulaufnahme
25 Führungsstege der Halterungen
27 Hinterschneidungen / Nuten
30 Verankerungsmodule
31 Vorderseite
32 Rückseite
33 Wandhalterungsfläche
34 Oberkante der Verankerungsmodule
35 Unterkante der Verankerungsmodule
36 Federelemente
37 Rastaussparungen
38 Öffnungen / Durchgangsbohrungen / Langlochbohrungen
39 Längskanten der Verankerungsmodule
40 Halterungskupplung
41 Flächenaussparung
42 Haftstreifen
43 Abziehlasche
100 Halteanordnung
200 Halteanordnung
210, 210' Halterungen
212, 212' Rückwand
213 Verankerungsmodulhaltefläche
218 Unterkante der Rückwand
219 Oberkante der Rückwand
220 Raststeg
221' Zunge
222 Zungenspitze
224 Verankerungsmodulaufnahme
225 Führungsstege der Halterungen
227 Hinterschneidungen / Nuten
230 Verankerungsmodule
233 Wandhalterungsfläche
236 Federelemente
237 Rastaussparungen
238 Öffnungen / Durchgangsbohrungen / Langlochbohrungen
240 Halterungskupplung
α Innenwinkel zwischen Rückwand und erstem Bodenabschnitt
β Innenwinkel zwischen Vorderwand und zweitem Bodenabschnitt
γ Winkel der Bodenabschnitte / Öffnungswinkel der Aufnahme
δ Winkel der Abschnitte der geknickten Vorderwand
a lichter Abstand zwischen zwei seitlichen Außenanschlägen
b Breitenmaß des mobilen Endgeräts
E Endgerät
KL Knicklinie
L Längsrichtung
Lv Vorderwandlängsrichtung
Q Querrichtung

## Patentansprüche

1. Halteanordnung (100, 200) zur Halterung eines mobilen Endgeräts (E),
umfassend zumindest eine erste Halterung (10, 210) und eine zweite Halterung (10', 210'), wobei die Halterungen (10, 10', 210, 210') jeweils eine Rückwand (12, 212, 212'), eine sich im Wesentlichen entlang der Rückwand (12, 212, 212') erstreckende Vorderwand (11, 11') und einen sich zwischen Vorderwand (11, 11') und Rückwand (12, 212, 212') erstreckenden Boden (15) aufweisen,
wobei die Vorderwand (11, 11'), die Rückwand (12, 212, 212') und der Boden (15) der ersten Halterung (10, 210) und der zweiten Halterung (10', 210') jeweils eine Aufnahme (17) bilden,
**dadurch gekennzeichnet, dass**
die Rückwand (12, 212, 212') jeweils eine von der Vorderwand (11, 11') abgewandte Verankerungsmodulhaltefläche (13, 213) mit jeweils zumindest einer Verankerungsmodulaufnahme (24, 224, 224') aufweist,
und die Halteanordnung (100, 200) zumindest ein erstes Verankerungsmodul (30, 230) und zumindest ein zweites Verankerungsmodul (30, 230) umfasst,
wobei die Verankerungsmodule (30, 230) eine Vorderseite (31), umfassend eine Halterungskupplung (40, 240), und eine Rückseite (32), umfassend eine Wandhalterungsfläche (33, 233), aufweisen,
und wobei in einem bestimmungsgemäß gekoppelten Zustand einer Halterung (10, 10', 210, 210') mit einem Verankerungsmodul (30, 230) die Verankerungsmodulaufnahme (24, 224, 224') an der Rückwand (12, 212, 212') der Halterung (10, 10', 210, 210') mit der Halterungskupplung (40, 240) an der Vorderseite (31) des Verankerungsmoduls (30, 230) zusammenwirkt.

2. Halteanordnung nach Anspruch 1, wobei jeweils die Halterung (10, 10', 210, 210'), vorzugsweise in einer Längsrichtung (L) der Halterungen (10, 10', 210, 210'), verschiebbar auf oder an dem Verankerungsmodul (30, 230) angeordnet ist, und besonders bevorzugt in einem bestimmungsgemäß gekoppelten Zustand eine Halterung (10, 10', 210, 210') auf oder an dem Verankerungsmodul (30, 230) in einer Verankerungsstellung in Längsrichtung (L) eingeschoben angeordnet ist.

3. Halteanordnung nach einem der vorstehenden Ansprüche, wobei die Halterungen (10, 10', 210, 210'), jeweils zumindest einen seitlichen Außenanschlag (23) aufweisen, welcher sich zwischen Vorderwand (11, 11') und Rückwand (12, 212, 212'), senkrecht zu einer Längsrichtung (L) der Halterungen (10, 10', 210, 210') erstreckt.

4. Halteanordnung nach einem der vorstehenden Ansprüche, wobei
der Außenanschlag (23) eine Eckkantenversteifung (23e) zwischen Vorderwand (11, 11') und Rückwand (12, 212, 212') senkrecht zur Aufnahme (17)
und/oder
eine ineinandergreifende, vorzugsweise zweiteilige, besonders bevorzugt in einem entspannten Zustand ohne ein zu haltendes mobiles Endgerät (E) voneinander beabstandete, Hakenanordnung (23h) umfasst.

5. Halteanordnung nach einem der vorstehenden Ansprüche, wobei die Halterungen (10, 10', 210, 210') an der Verankerungsmodulhaltefläche (13, 213) der Rückwand (12, 212, 212') jeweils zumindest einen Führungssteg (25, 225), vorzugsweise zwei Führungsstege (25, 225), zur Kopplung eines jeweiligen Verankerungsmoduls (30, 230) aufweisen, wobei die Führungsstege (25, 225) vorzugsweise
- im Wesentlichen senkrecht zu einer Oberkante (19) und/oder Unterkante (18) der Rückwand (12, 212, 212') an der Verankerungsmodulhaltefläche (13, 213) der Rückwand (12, 212, 212') angeordnet sind,
oder
- besonders bevorzugt im Wesentlichen parallel zu einer Oberkante (219) und/oder Unterkante (218) der Rückwand (212, 212') an der Verankerungsmodulhaltefläche (213) der Rückwand (212, 212') angeordnet sind,
und/oder
- unter Bildung einer in einer Längsrichtung (L) der Halterungen (10, 10', 210, 210') verlaufenden Nut (27), besonders bevorzugt unter Bildung einer in einer Querrichtung (Q) der Halterungen (10, 10', 210, 210') verlaufenden Nut (227), zumindest eine Hinterschneidung (27, 227) aufweisen.

6. Halteanordnung nach einem der vorstehenden Ansprüche, wobei die Halteanordnung (100, 200) zumindest zwei Befestigungsmittel für eine Montage der Verankerungsmodule (30, 230) an einer Wandfläche umfasst,
wobei die Befestigungsmittel vorzugsweise Haftstreifen (42), besonders bevorzugt auf Zug entklebende Haftstreifen (42) mit einer Abziehlasche (43), umfassen, wobei jeweils zumindest ein Haftstreifen (42) zur Anordnung auf einer Wandhalterungsfläche (33, 233) einer Rückseite (32) eines Verankerungsmoduls (30, 230) anzuordnen oder angeordnet ist und/oder
wobei die Verankerungsmodule (30, 230) vorzugsweise zumindest eine Öffnung (38, 238) aufweisen und wobei die Befestigungsmittel vorzugsweise Schraubmittel umfassen, wobei jeweils ein Schraubmittel so ausgebildet ist, dass es in einem bestimmungsgemäß an eine Wandfläche montierten Zustand mit einer Öffnung (38, 238) der Verankerungsmodule (30, 230) zusammenwirkt.

7. Halteanordnung nach einem der vorstehenden Ansprüche, wobei die Verankerungsmodulaufnahme (24) der Rückwand (12) und/oder die Verankerungsmodule (30) so ausgebildet sind, dass im bestimmungsgemäß gekoppelten Zustand der Halterungen (10, 10') mit den Verankerungsmodulen (30) zwischen der Verankerungsmodulaufnahme (24) an der Rückwand (12) der Halterungen (10, 10') und der Halterungskupplung (40) an der Vorderseite (31) der Verankerungsmodule (30) eine Kavität verbleibt,
wobei vorzugsweise die Verankerungsmodule (30) in den Vorderseiten (31) jeweils eine Flächenaussparung (41) aufweisen, welche sich von einer Oberkante (34) beginnend in der Vorderseite (31) in Richtung gegenüberliegende Unterkante (35) der Vorderseite (31) erstreckt.

8. Halteanordnung nach Anspruch 6 oder 7, wobei sich bei einem Haftstreifen (42) mit einer Abziehlasche (43) die Abziehlasche (43) über das Verankerungsmodul (30) hinaus erstreckt,
wobei die Abziehlasche (43) im bestimmungsgemäßen Zustand um die Oberkante (34) des Verankerungsmoduls (30) herum in die Flächenaussparung (41) zwischen Vorderseite (31) und Rückwand (12) der Halterungen (10, 10') umgeklappt ist.

9. Halteanordnung (100, 200), insbesondere nach einem der vorstehenden Ansprüche, umfassend zumindest eine erste Halterung (10, 210) und eine zweite Halterung (10', 210'), wobei die Halterungen (10, 10', 210, 210') jeweils eine Rückwand (12, 212, 212'), eine sich im Wesentlichen entlang der Rückwand (12, 212, 212') erstreckende Vorderwand (11, 11') und einen sich zwischen Vorderwand (11, 11') und Rückwand (12, 212, 212') erstreckenden Boden (15) aufweisen,
wobei die Vorderwand (11, 11'), die Rückwand (12, 212, 212') und der Boden (15) der ersten Halterung (10, 210) und der zweiten Halterung (10', 210') jeweils eine Aufnahme (17) bilden,
wobei der Boden (15)
- einen an die Rückwand (12, 212, 212') angrenzenden ersten Bodenabschnitt (15a) aufweist, der im Wesentlichen schräg, vorzugsweise im Wesentlichen in einem Winkel (a) von höchstens 60°, besonders bevorzugt höchstens 50°, weiter bevorzugt höchstens 45°, zur Rückwand (12, 212, 212') angeordnet ist, und
- einen an die Vorderwand (11, 11') angrenzenden zweiten Bodenabschnitt (15b) aufweist, der im Wesentlichen schräg, vorzugsweise im Wesentlichen in einem Winkel (β) von höchstens 60°, besonders bevorzugt höchstens 55°, weiter bevorzugt höchstens 50°, zur Vorderwand (11, 11') angeordnet ist,
wobei vorzugsweise die beiden Bodenabschnitte (15a, 15b) V-förmig, weiter bevorzugt im Wesentlichen in einem Winkel (γ) von höchstens 90°, aufeinander zulaufen.

10. Halteanordnung nach einem der vorstehenden Ansprüche, wobei die Vorderwände (11, 11') der Halterungen (10, 10', 210, 210') jeweils
- in einem ersten Abschnitt (11a, 11a') entlang einer Vorderwandlängsrichtung (Lv) vom Boden (15) weg entlang der Rückwände (12, 212, 212') schräg bis zu einer Knicklinie (KL) auf die Rückwände (12, 212, 212') zulaufen und
- in einem zweiten Abschnitt (11b, 11b') ab der Knicklinie (KL) weiter entlang der Vorderwandlängsrichtung (Lv) wiederum von den Rückwänden (12, 212, 212') schräg weglaufen,
wobei die Knicklinie (KL) vorzugsweise schräg zur Vorderwandlängsrichtung (Lv) verläuft und wobei vorzugsweise bei einer bestimmungsgemäßen Montage zweier Halterungen (10, 10', 210, 210') an einer Wandfläche zur Halterung eines mobilen Endgeräts (E) die Knicklinien (KL) der beiden Halterungen (10, 10', 210, 210') schräg zum Boden (15) aufeinander zu verlaufen.

11. Verfahren zur Montage einer Halteanordnung (100, 200) für ein mobiles Endgerät (E) an einer Wandfläche, umfassend zumindest die folgenden Schritte:
- Anbringen eines ersten Verankerungsmoduls (30, 230) und eines zweiten Verankerungsmoduls (30, 230) derart an einer Wandfläche, dass eine Längskante (39) des ersten Verankerungsmoduls (30, 230) und eine Längskante (39) des zweiten Verankerungsmoduls (30, 230) im Wesentlichen parallel zueinander angeordnet sind und dass eine Oberkante (34) des ersten Verankerungsmoduls (30, 230) und eine Oberkante (34) des zweiten Verankerungsmoduls (30, 230) im Wesentlichen in einer Flucht liegen,
- Koppeln jeweils einer Halterung (10, 10', 210, 210') mit jeweils einem der Verankerungsmodule (30, 230), welche Halterungen (10, 10', 210, 210') jeweils eine Rückwand (12, 212, 212'), eine sich im Wesentlichen entlang der Rückwand (12, 212, 212') erstreckende Vorderwand (11, 11') und einen sich zwischen Vorderwand (11, 11') und Rückwand (12, 212, 212') erstreckenden Boden (15) aufweisen, so dass die Vorderwand (11, 11'), die Rückwand (12, 212, 212') und der Boden (15) der ersten Halterung (10, 210) und der zweiten Halterung (10', 210') jeweils eine Aufnahme (17) bilden, wobei die Rückwand (12, 212, 212') der Halterung (10, 10', 210, 210') jeweils an einer von der Vorderwand (11, 11') abgewandten Verankerungsmodulhaltefläche (13, 213) zumindest eine Verankerungsmodulaufnahme (24, 224) aufweist, welche zur Kopplung mit einem Verankerungsmodul (30, 230) mit einer Halterungskupplung (40, 240) an einer Vorderseite (31) des Verankerungsmoduls (30, 230) zusammenwirkt,
wobei vorzugsweise
- das Koppeln einer Halterung (210, 210') mit einem Verankerungsmodul (230) jeweils durch ein seitliches Aufschieben der Halterung (210, 210') auf das Verankerungsmodul (230) in einer Querrichtung (Q) der Halterung (210, 210') erfolgt, besonders bevorzugt von einer jeweils anderen, vom Verankerungsmodul (230) wegweisenden Kante des Verankerungsmoduls (230) aus,
oder wobei
- das Koppeln einer Halterung (10, 10') mit einem Verankerungsmodul (30) jeweils durch ein Aufschieben der Halterung (10, 10') auf das Verankerungsmodul (30) in einer Längsrichtung (L) der Halterung (10, 10') erfolgt.

12. Verfahren nach Anspruch 11, umfassend:
- Verschieben der Halterungen (10, 10', 210, 210') auf den Verankerungsmodulen (230) in einer Querrichtung (Q) und/oder in einer Längsrichtung (L) der Halterungen (10, 10', 210, 210'),
wobei sich die Aufnahmen (17) der Halterungen (10, 10', 210, 210') vorzugsweise bis zu einer ersten Abstandsstellung annähern,
- Einstecken eines mobilen Endgeräts (E) in die Aufnahmen (17) der Halterungen (10, 10', 210, 210') und
- weiteres Verschieben der Halterungen (210, 210') auf den Verankerungsmodulen (230) in der Querrichtung (Q) der Halterungen (210, 210') zur Anpassung des lichten Abstands (a) zwischen zwei seitlichen Außenanschlägen (23), welche jeweils zwischen Vorderwand (11, 11') und Rückwand (212, 212') der Halterungen (210, 210') angeordnet sind, an ein Breitenmaß (b) des mobilen Endgeräts (E), vorzugsweise zur passigen Halterung oder Klemmung des mobilen Endgeräts (E) in der Halteanordnung (200).

13. Verwendung einer Halteanordnung (100, 200) nach einem der vorstehenden Ansprüche 1 bis 10 zur Montage eines mobilen Endgeräts (E) an einer Wandfläche.
